# EUROPEAN PATENT APPLICATION

(11) **EP 4 478 818 A1**
(43) Date of publication of application: **18.12.2024**
(21) Application number: 23752433.5
(22) Date of filing: 10.02.2023
(51) Int. Cl.: H04W 72/23, H04L 5/00

(54) **UPLINK TCI STATE DETERMINATION METHOD AND APPARATUS, TERMINAL AND NETWORK-SIDE DEVICE**

(30) Priority: 10.02.2022 CN 202210126453; 14.02.2022 CN 202210135594
(71) Applicant: VIVO MOBILE COMMUNICATION CO., LTD., Dongguan, Guangdong 523863 (CN)
(72) Inventor: YANG, Yu, Dongguan, Guangdong 523863 (CN)
(74) Representative: Conti, Marco
(86) International application number: PCT/CN2023/075440
(87) International publication number: WO 2023/151655

(57) **Abstract**

This application discloses an uplink TCI state determining method and apparatus, a terminal, and a network-side device and pertains to the field of communication technologies. The uplink TCI state determining method of embodiments of this application includes: obtaining, by a terminal, common beam information indicated by a network-side device, where the common beam information includes N first transmission configuration indicator TCI states, the first TCI state being a joint TCI state or a separate uplink UL TCI state, and N being an integer greater than or equal to 1; and determining, by the terminal, a target TCI state of a target uplink channel based on target information.

## Description

### CROSS-REFERENCE TO RELATED APPLICATIONS

This application claims priority to Chinese Patent Application No. 202210126453.3, filed in China on February 10, 2022 and Chinese Patent Application No. 202210135594.1, filed in China on February 14, 2022, which are incorporated herein by reference in their entireties.

### TECHNICAL FIELD

This application relates to the field of communication technologies, and specifically, to an uplink TCI state determining method and apparatus, a terminal, and a network-side device.

### BACKGROUND

In a multi-transmission reception point (Multi Transmission Reception Point, mTRP) scenario, beam information of various channels is based on schemes before the unified transmission configuration indicator (Transmission Configuration Indicator, TCI) state framework (unified TCI framework) in the 3rd Generation Partnership Project (3rd Generation Partnership Project, 3GPP) Release 17 (Release 17, R17), meaning that, a network-side device needs to use a beam indication scheme corresponding to each channel for the channel to indicate a TCI state (state) thereof, so that a terminal uses the TCI state indicated by the network-side device to determine which beam to use for transmission. This increases the complexity of the beam indication process of channels.

### SUMMARY

Embodiments of this application provide an uplink TCI state determining method and apparatus, a terminal, and a network-side device, which can simplify the beam indication process of uplink channels by indicating a common TCI state for different uplink channels.

According to a first aspect, an uplink TCI state determining method is provided, applied to a terminal. The method includes:
obtaining, by a terminal, common beam information indicated by a network-side device, where the common beam information includes N first transmission configuration indicator TCI states, the first TCI state being a joint TCI state or a separate uplink UL TCI state, and N being an integer greater than or equal to 1; and
determining, by the terminal, a target TCI state of a target uplink channel based on target information, where the target information includes at least one of the following:
   the number of first TCI states;
   arrangement order or arrangement positions of the first TCI states;
   correspondence between the first TCI states and first identifier information;
   type of the target uplink channel;
   transmission mode of the target uplink channel;
   time-domain behavior of the target uplink channel or time-domain behavior of information carried on the target uplink channel;
   the number of first identifier information corresponding to the target uplink channel; and
   value of the first identifier information corresponding to the target uplink channel; where
   the first identifier information includes at least one of the following:
      control resource set CORESET index information;
      CORESET pool index CORESETPoolIndex;
      transmission reception point TRP identifier ID information;
      channel group identifier information;
      CORESET group index information; and
      physical uplink control channel PUCCH resource group identifier information.

According to a second aspect, an uplink TCI state determining apparatus is provided, applied to a terminal. The apparatus includes:
an obtaining module adapted to obtain common beam information indicated by a network-side device, where the common beam information includes N first transmission configuration indicator TCI states, the first TCI state being a joint TCI state or a separate uplink UL TCI state, and N being an integer greater than or equal to 1; and
a first determining module adapted to determine a target TCI state of a target uplink channel based on target information, where the target information includes at least one of the following:
   the number of first TCI states;
   arrangement order or arrangement positions of the first TCI states;
   correspondence between the first TCI states and first identifier information;
   type of the target uplink channel;
   transmission mode of the target uplink channel;
   time-domain behavior of the target uplink channel or time-domain behavior of information carried on the target uplink channel;
   the number of first identifier information corresponding to the target uplink channel; and
   value of the first identifier information corresponding to the target uplink channel; where
   the first identifier information includes at least one of the following:
      control resource set CORESET index information;
      CORESET pool index CORESETPoolIndex;
      transmission reception point TRP identifier ID information;
      channel group identifier information;
      CORESET group index information; and
      physical uplink control channel PUCCH resource group identifier information.

According to a third aspect, an uplink TCI state determining method is provided, applied to a network-side device. The method includes:
indicating, by a network-side device, common beam information to a terminal, where the common beam information includes N first transmission configuration indicator TCI states, the first TCI state being a joint TCI state or a separate uplink UL TCI state, and N being an integer greater than or equal to 1; and
determining, by the network-side device, a target TCI state of a target uplink channel based on target information, where the target information includes at least one of the following:
   the number of first TCI states;
   arrangement order or arrangement positions of the first TCI states;
   correspondence between the first TCI states and first identifier information;
   type of the target uplink channel;
   transmission mode of the target uplink channel;
   time-domain behavior of the target uplink channel or time-domain behavior of information carried on the target uplink channel;
   the number of first identifier information corresponding to the target uplink channel; and
   value of the first identifier information corresponding to the target uplink channel; where
   the first identifier information includes at least one of the following:
      control resource set CORESET index information;
      CORESET pool index CORESETPoolIndex;
      transmission reception point TRP identifier ID information;
      channel group identifier information;
      CORESET group index information; and
      physical uplink control channel PUCCH resource group identifier information.

According to a fourth aspect, an uplink TCI state determining apparatus is provided, applied to a network-side device. The apparatus includes:
an indicating module adapted to indicate common beam information to a terminal, wherein the common beam information comprises N first transmission configuration indicator TCI states, the first TCI state being a joint TCI state or a separate uplink UL TCI state, and N being an integer greater than or equal to 1; and
a second determining module adapted to determine a target TCI state of a target uplink channel based on target information, where the target information includes at least one of the following:
   the number of first TCI states;
   arrangement order or arrangement positions of the first TCI states;
   correspondence between the first TCI states and first identifier information;
   type of the target uplink channel;
   transmission mode of the target uplink channel;
   time-domain behavior of the target uplink channel or time-domain behavior of information carried on the target uplink channel;
   the number of first identifier information corresponding to the target uplink channel; and
   value of the first identifier information corresponding to the target uplink channel; where
   the first identifier information includes at least one of the following:
      control resource set CORESET index information;
      CORESET pool index CORESETPoolIndex;
      transmission reception point TRP identifier ID information;
      channel group identifier information;
      CORESET group index information; and
      physical uplink control channel PUCCH resource group identifier information.

According to a fifth aspect, a terminal is provided. The terminal includes a processor and a memory. The memory stores a program or instructions executable on the processor. When the program or instructions are executed by the processor, the steps of the method according to the first aspect are implemented.

According to a sixth aspect, a terminal is provided, including a processor and a communication interface. The communication interface is adapted to obtain common beam information indicated by a network-side device, where the common beam information includes N first transmission configuration indicator TCI states, the first TCI state being a joint TCI state or a separate uplink UL TCI state, and N being an integer greater than or equal to 1. The processor is adapted to determine a target TCI state of a target uplink channel based on target information, where the target information includes at least one of the following:
the number of first TCI states;
arrangement order or arrangement positions of the first TCI states;
correspondence between the first TCI states and first identifier information;
type of the target uplink channel;
transmission mode of the target uplink channel;
time-domain behavior of the target uplink channel or time-domain behavior of information carried on the target uplink channel;
the number of first identifier information corresponding to the target uplink channel; and
value of the first identifier information corresponding to the target uplink channel; where
the first identifier information includes at least one of the following:
   control resource set CORESET index information;
   CORESET pool index CORESETPoolIndex;
   transmission reception point TRP identifier ID information;
   channel group identifier information;
   CORESET group index information; and
   physical uplink control channel PUCCH resource group identifier information.

According to a seventh aspect, a network-side device is provided. The network-side device includes a processor and a memory. The memory stores a program or instructions executable on the processor. When the program or instructions are executed by the processor, the steps of the method according to the third aspect are implemented.

According to an eighth aspect, a network-side device is provided, including a processor and a communication interface. The communication interface is adapted to indicate common beam information to a terminal, where the common beam information includes N first transmission configuration indicator TCI states, the first TCI state being a joint TCI state or a separate uplink UL TCI state, and N being an integer greater than or equal to 1. The processor is adapted to determine a target TCI state of a target uplink channel based on target information, where the target information includes at least one of the following:
the number of first TCI states;
arrangement order or arrangement positions of the first TCI states;
correspondence between the first TCI states and first identifier information;
type of the target uplink channel;
transmission mode of the target uplink channel;
time-domain behavior of the target uplink channel or time-domain behavior of information carried on the target uplink channel;
the number of first identifier information corresponding to the target uplink channel; and
value of the first identifier information corresponding to the target uplink channel; where
the first identifier information includes at least one of the following:
   control resource set CORESET index information;
   CORESET pool index CORESETPoolIndex;
   transmission reception point TRP identifier ID information;
   channel group identifier information;
   CORESET group index information; and
   physical uplink control channel PUCCH resource group identifier information.

According to a ninth aspect, a wireless communication system is provided, including a terminal and a network-side device. The terminal may be adapted to execute the steps of the uplink TCI state determining method according to the first aspect, and the network-side device may be adapted to execute the steps of the uplink TCI state determining method according to the third aspect.

According to a tenth aspect, a readable storage medium is provided, where a program or instructions are stored in the readable storage medium, and when the program or the instructions are executed by a processor, the steps of the method according to the first aspect are implemented, or the steps of the method according to the third aspect are implemented.

According to an eleventh aspect, a chip is provided. The chip includes a processor and a communication interface, the communication interface is coupled to the processor, and the processor is adapted to run a program or instructions to implement the method according to the first aspect or the method according to the third aspect.

According to a twelfth aspect, a computer program/program product is provided. The computer program/program product is stored in a storage medium, and the computer program/program product is executed by at least one processor to implement the steps of the uplink TCI state determining method according to the first aspect or the steps of the uplink TCI state determining method according to the third aspect.

In the embodiments of this application, the terminal obtains the common beam information that is indicated by the network-side device and that can be shared or used by various uplink channels. Even in a multi-TRP scenario, the terminal can determine target TCI states of various uplink channels based on target information, with no need to indicate a target TCI state of each uplink channel according to a TCI state indication process corresponding to each channel. In the embodiments of this application, a unified TCI state indication framework can be applied in a multi-TRP scenario, thereby simplifying the complexity of TCI state indication or beam indication of various uplink channels.

### BRIEF DESCRIPTION OF DRAWINGS

FIG. 1 is a schematic structural diagram of a wireless communication system to which embodiments of this application can be applied;
FIG. 2 is a flowchart of an uplink TCI state determining method according to an embodiment of this application;
FIG. 3 is a flowchart of another uplink TCI state determining method according to an embodiment of this application;
FIG. 4 is a schematic structural diagram of an uplink TCI state determining apparatus according to an embodiment of this application;
FIG. 5 is a schematic structural diagram of another uplink TCI state determining apparatus according to an embodiment of this application;
FIG. 6 is a schematic structural diagram of a communication device according to an embodiment of this application;
FIG. 7 is a schematic diagram of a hardware structure of a terminal according to an embodiment of this application; and
FIG. 8 is a schematic structural diagram of a network-side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application fall within the protection scope of this application.

The terms "first", "second", and the like in the specification and claims of this application are used to distinguish between similar objects rather than to describe a specific order or sequence. It should be understood that terms used in this way are interchangeable in appropriate circumstances such that the embodiments of this application can be implemented in other orders than the order illustrated or described herein. In addition, objects distinguished by "first" and "second" are generally of a same type, and the quantities of the objects are not limited, for example, there may be one or more first objects. In addition, "and/or" in the specification and claims represents at least one of the connected objects, and the character "/" generally indicates that the contextually associated objects have an "or" relationship.

It should be noted that technologies described in the embodiments of this application are not limited to long term evolution (Long Term Evolution, LTE) or LTE-Advanced (LTE-Advanced, LTE-A) systems, and may also be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency Division Multiple Access, SC-FDMA), and other systems. The terms "system" and "network" in the embodiments of this application are often used interchangeably, and the technology described herein may be used in the above-mentioned systems and radio technologies as well as other systems and radio technologies. In the following descriptions, a new radio (New Radio, NR) system is described for illustrative purposes, and NR terms are used in most of the following descriptions, although these technologies may also be applied to other applications than the NR system application, for example, to the 6th generation (6th Generation, 6G) communication system.

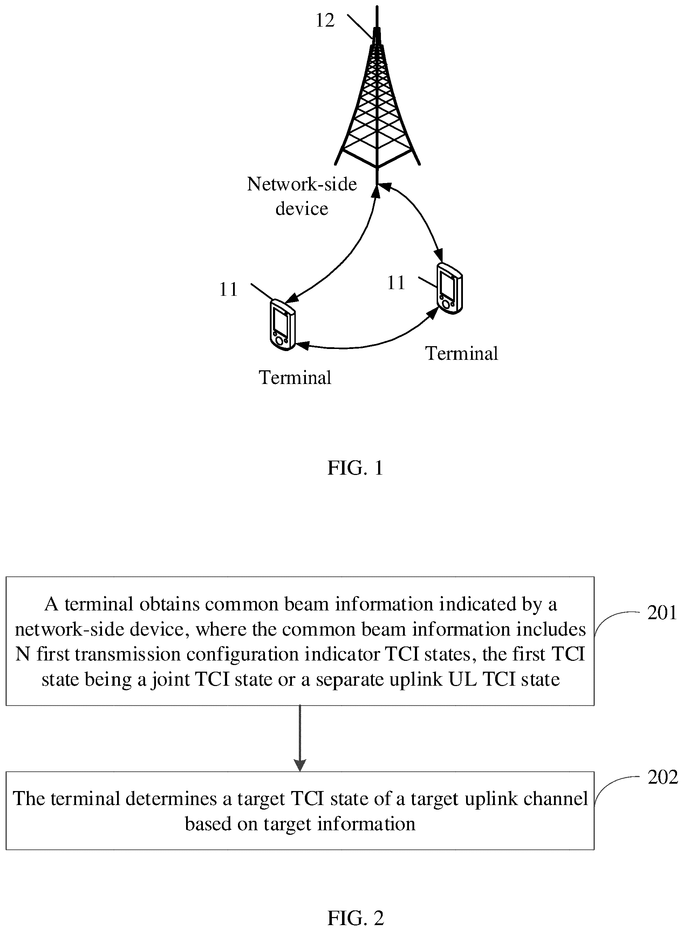

FIG. 1 is a block diagram of a wireless communication system to which the embodiments of this application may be applicable. The wireless communication system includes a terminal 11 and a network-side device 12. The terminal 11 can be a mobile phone, tablet personal computer (Tablet Personal Computer), laptop computer (Laptop Computer) or notebook computer, personal digital assistant (Personal Digital Assistant, PDA), palmtop computer, netbook, ultra-mobile personal computer (ultra-mobile personal computer, UMPC), mobile internet device (Mobile Internet Device, MID), augmented reality (augmented reality, AR)/virtual reality (virtual reality, VR) device, robot, wearable device (Wearable Device, WD), vehicle user equipment (Vehicle User Equipment, VUE), pedestrian user equipment (Pedestrian User Equipment, PUE), smart home device (wireless communication-enabled home devices such as refrigerators, televisions, washing machines, or furniture), gaming console, personal computer (Personal Computer, PC), automated teller machine or self-service machine, or other terminal-side device. Wearable devices include smartwatches, smart bands, smart earphones, smart glasses, smart jewelry (smart bangles, smart bracelets, smart rings, smart necklaces, smart foot bangles, and smart anklets), smart wristbands, and smart clothing. It should be noted that the specific type of the terminal 11 is not limited in the embodiments of this application. The network-side device 12 can include an access network device or core network device, where the access network device can also be referred to as a radio access network device, radio access network (Radio Access Network, RAN), radio access network function, or radio access network unit. The access network device can include base stations, wireless local area network (Wireless Local Area Networks, WLAN) access points, Wi-Fi nodes, or the like. The base station can be referred to as Node B, evolved Node B (eNB), access point, base transceiver station (Base Transceiver Station, BTS), radio base station, radio transceiver, basic service set (Basic Service Set, BSS), extended service set (Extended Service Set, ESS), home Node B, home evolved Node B, transmission reception point (Transmitting Receiving Point, TRP), or other appropriate terms in the field. As long as the same technical effect is achieved, the base station is not limited to any specific technical terminology. It should be noted that in the embodiments of this application, only the base station in the NR system is introduced as an example, and the specific type of the base station is not limited.

With reference to the accompanying drawings, the following describes in detail an uplink TCI state determining method, an uplink TCI state determining apparatus, a terminal, and a network-side device provided in the embodiments of this application with some embodiments and application scenarios thereof.

In wireless communication, after beam measurement and beam reporting, a network-side device may provide a beam indication for a downlink and uplink channel or a reference signal, to establish a beam link between the network-side device and user equipment (User Equipment, UE, which is referred to as terminal below for short) so as to transmit the channel or the reference signal.

It should be noted that beam information in the embodiments of this application may include at least one of the following: beam identifier information, spatial relation (spatial relation) information, spatial domain transmission filter (spatial domain transmission filter) information, spatial domain reception filter (spatial domain reception filter) information, spatial filter (spatial filter) information, transmission configuration indicator state (TCI state) information, quasi-colocation (Quasi-colocation QCL) information, QCL parameter, and the like. The downlink beam information may be usually represented by TCI state information or QCL information. Uplink beam information may be usually represented by TCI state information or spatial relation information.

In the related art, each channel or reference signal has its own beam indication mechanism:
(1) With regard to beam indication (Beam indication) for physical downlink control channels (Physical Downlink Control Channel, PDCCH), a network-side device configures K TCI states for each control resource set (Control resource set, CORESET) through radio resource control (Radio Resource Control, RRC) signaling. In a case that K > 1, one TCI state is indicated or activated by a medium access control (Medium Access Control, MAC) control element (Control Element, CE). In a case that K = 1, no additional MAC CE signaling is required. During PDCCH monitoring, UE uses the same QCL for all search spaces (Search Space, SS) of a CORESET, that is, using the same TCI state for monitoring a PDCCH. A reference signal (reference Signal, for example, a periodic channel state information reference signal (Channel State Information Reference Signal, CSI-RS) resource (resource), a semi-persistent CSI-RS resource, or a synchronization signal block (Synchronization Signal Block, SSB)) in the TCI state and a UE-specific (UE-specific) PDCCH demodulation reference signal (Demodulation Reference Signal, DMRS) port are spatially QCLed. The UE may learn, based on the TCI state, which receive beam is used for receiving the PDCCH.
(2) With regard to beam indication for a physical downlink shared channel (Physical Downlink Shared Channel, PDSCH), a network-side device configures M TCI states through RRC signaling, activates TCI states corresponding to eight codepoints (codepoint) at maximum through MAC CE signaling, and then notifies the TCI states through a three-bit TCI field (field) in downlink control information (Downlink Control Information, DCI). A reference signal in the TCI state and a DMRS port of a to-be-scheduled PDSCH are QCLed. UE may learn, based on the TCI state, which receive beam is used for receiving the PDSCH.
(3) With regard to a beam indication for a CSI-RS, when a CSI-RS type is periodic CSI-RS, a network-side device configures QCL information for a CSI-RS resource through RRC signaling. In a case that a CSI-RS type is semi-persistent CSI-RS, a network-side device activates one CSI-RS resource from an RRC-configured CSI-RS resource set through MAC CE signaling and also indicates its QCL information. In a case that a CSI-RS type is aperiodic CSI-RS, a network-side device configures QCL for a CSI-RS resource through RRC signaling, and triggers the CSI-RS through DCI.
(4) With regard to a beam indication for physical uplink control channel (Physical Uplink Control Channel, PUCCH), a network-side device configures spatial relation information (spatial relation information) for each PUCCH resource through the "PUCCH-SpatialRelationInfo" parameter in RRC signaling. When a plurality of pieces of spatial relation information are configured for a PUCCH resource, one piece of the spatial relation information is indicated or activated through a MAC CE. In a case that only one piece of spatial relation information is configured for the PUCCH resource, no additional MAC CE signaling is required.
(5) With regard to a beam indication for physical uplink shared channel (Physical Uplink Shared Channel, PUSCH), in a case that spatial relation information of a PUSCH is a PUSCH scheduled by DCI carried in a current PDCCH, in a sounding reference signal (Sounding Reference Signal, SRS) resource indicator (SRS resource indicator, SRI) field (field) of the DCI, each SRI codepoint indicates one SRI, and the SRI is used to indicate the spatial relation information of the PUSCH.
(6) With regard to a beam indication for an SRS, in a case that an SRS type is periodic SRS, a network-side device configures spatial relation information for an SRS resource through RRC signaling. In a case that an SRS type is semi-persistent SRS, a network-side device activates spatial relation information through MAC CE signaling. In a case that an SRS type is aperiodic SRS, a network-side device configures spatial relation information for an SRS resource through RRC signaling, and updates the information through MAC CE signaling.

It can be seen from the above that in the related art, beam indication processes corresponding to different types of channels or reference signal resources are required to indicate target TCI states for use by these channels or reference signal resources. Therefore, it can be seen that the beam indication processes are complex.

In order to simplify the beam indication processes, a new TCI framework (framework) is introduced in the 3rd generation partnership project (3rd Generation Partnership Project, 3GPP) release (Release) 17 of 5G NR. This framework can be referred to as a unified TCI framework (unified TCI framework). To be specific, a same beam (beam) indicated by a network-side device through a MAC CE and/or DCI can be used for the transmission of multiple channels. This beam can also be referred to as a common beam (common beam). The beam indication process of the unified TCI framework is as follows:
A network-side device configures a TCI state pool (pool) through RRC signaling and activates one or more TCI states in the TCI state pool through MAC CE signaling. In a case that a TCI state corresponding to one codepoint is activated through a MAC CE, the activated TCI state is directly applied to a target signal. In a case that TCI states respectively corresponding to multiple codepoints are activated through a MAC CE, the network-side device uses a TCI field in DCI to indicate one codepoint, and a TCI state corresponding to the one codepoint is applied to a target signal.

TCI states in the unified TCI framework can include two types: joint (joint) TCI states and separate (separate) TCI states, and the types are configured by the network-side device through RRC signaling. For joint TCI states, each codepoint corresponds to one TCI state. For separate TCI states, each codepoint can correspond to one downlink (Down Link, DL) TCI state and one uplink (Up Link, UL) TCI state, one DL TCI state, or one UL TCI state.

Source (source) RSes of TCI states can be categorized into the following two cases:
(1) DL: CSI-RS for beam management (CSI-RS for beam management) or CSI-RS for tracking (CSI-RS for tracking); and
(2) UL: SSB, CSI-RS for beam management, CSI-RS for tracking, or SRS for beam management (SRS for beam management).

Target signals of TCI states can be categorized into the following two cases:
(1) DL: UE-dedicated reception on PDSCH (UE-dedicated reception on PDSCH), UE-dedicated reception on all or subset of CORESETs (UE-dedicated reception on all or subset of CORESETs), aperiodic CSI-RS resources for CSI (Aperiodic CSI-RS resources for CSI), aperiodic CSI-RS resources for beam management (Beam Management, BM) (Aperiodic CSI-RS resources for BM), or DMRS(s) associated with non-UE-dedicated reception on CORESET(s) and the associated PDSCH (associated with the serving cell physical cell identifier (Physical Cell Identifier, PCI)) (DMRS(s) associated with non-UE-dedicated reception on CORESET(s) and the associated PDSCH (associated with the serving cell PCI); and
(2) UL: dynamic-grant/configured-grant based PUSCH (dynamic-grant/configured-grant based PUSCH), all of dedicated PUCCH resources (all of dedicated PUCCH resources), aperiodic SRS resources or resource sets for BM (Aperiodic SRS resources or resource sets for BM), SRS for antenna switching (SRS for antenna switching), SRS for codebook (SRS for codebook), or SRS for non-codebook (SRS for non-codebook).

In implementation, in a case that the network-side device uses DCI for beam indication, DCI formats (formats) 1_1/1_2 with DL allocation and DCI format 1_1/1_2 without DL allocation.

An application time of a TCI state indicated by beam indication DCI (beam application time) is defined as follows: the first slot to apply the indicated TCI state is at least Y symbols after the last symbol of the acknowledgment of the joint or separate DL/UL beam indication (the first slot to apply the indicated TCI is at least Y symbols after the last symbol of the acknowledgment of the joint or separate DL/UL beam indication).

Pathloss (pathloss RS, PLRS) in power control parameters is configured by a network-side device within a TCI state or associated with a TCI state. Other parameters in the power control parameters (such as parameter configurations P0, alpha, and close loop index (close loop index)) are configured by the network-side device to be associated with the TCI state. PUCCH, PUSCH, and SRS all have their own parameter setting (setting) associated with TCI states or included in configuration information of respective channels.

For a carrier aggregation (Carrier Aggregation, CA) scenario, a network indicates common QCL information (common QCL information) and/or common UL TX spatial filter(s) across a set of configured component carriers (Component Carrier, CC) (common UL TX spatial filter(s) across a set of configured CC).

It should be noted that although the unified TCI framework is proposed in 3GPP R17 as above, it is only applicable to single-TRP (single-TRP, sTRP) scenarios but not applicable to multi-TRP (multi-TRP, mTRP) transmission introduced in 3GPP R16, which means that, currently, there is no solution to apply the unified TCI framework to uplink channels in mTRP scenarios. The embodiments of this application propose a solution by which the unified TCI framework can be applied to uplink channels in mTRP scenarios.

Referring to FIG. 2, an embodiment of this application provides an uplink TCI state determining method which can be executed by a terminal, and the terminal may be any of various terminals 11 listed in FIG. 1 or other types of terminals. This is not specifically limited herein. As shown in FIG. 2, the uplink TCI state determining method can include the following steps.

Step 201. A terminal obtains common beam information indicated by a network-side device, where the common beam information includes N first transmission configuration indicator TCI states, the first TCI state being a joint TCI state or a separate uplink UL TCI state, and N being an integer greater than or equal to 1.

In implementation, the first TCI state can be understood as an activated TCI state that can be shared by uplink channels, reference signal resources, or reference signal resource sets in a mTRP scenario. For example, the network-side device configures a TCI state pool through RRC signaling, and activates TCI states corresponding to one or at least two codepoints through MAC CE signaling. In a case that the number of codepoints corresponding to activated TCI states is greater than one, the network-side device then uses a TCI field in DCI to indicate at least part of the activated TCI states as the first TCI state.

The multi-TRP scenario can be understood as follows: the network-side device can have at least two TRPs, and different TRPs can include the same and/or different beams. During transmission, the network-side device can communicate with the terminal via one or more of the at least two TRPs.

In implementation, the number of first TCI states may usually be two, or certainly, may be one or more than two. For ease of explanation, the number of first TCI states being two is usually used as a typical example for description in the following embodiments. The number of first TCI states is not specifically limited herein.

Step 202. The terminal determines a target TCI state of a target uplink channel based on target information.

The target information includes at least one of the following:
the number of first TCI states;
arrangement order or arrangement positions of the first TCI states;
correspondence between the first TCI states and first identifier information;
type of the target uplink channel (for example, PUSCH, PUCCH, or UL RS resource);
transmission mode of the target uplink channel;
time-domain behavior of the target uplink channel or time-domain behavior of information carried on the target uplink channel;
the number of first identifier information corresponding to the target uplink channel; and
value of the first identifier information corresponding to the target uplink channel; where
the first identifier information includes at least one of the following:
   control resource set CORESET index information;
   CORESET pool index CORESETPoolIndex;
   transmission reception point TRP identifier ID information;
   channel group identifier information;
   CORESET group index information; and
   physical uplink control channel (Physical Uplink Control Channel, PUCCH) resource group identifier information.

In implementation, the number of first TCI states may be one or at least two. For example, in a scenario in which the network-side device has N TRPs, the network-side device may indicate N first TCI states. The first TCI state may be a joint TCI state or separate uplink (UpLink, UL) TCI state. This is not specifically limited herein.

In addition, the type of the target uplink channel may include: physical uplink control channel (Physical Uplink Control Channel, PUCCH), physical uplink shared channel (Physical Uplink Shared Channel, PUSCH), and UL RS resource.

The PUCCH may further be at least one of the following:
any PUCCH;
PUCCH scheduled or associated with a preset physical downlink control channel (Physical Downlink Control Channel, PDCCH); and
UE-dedicated (UE-dedicated) PUCCH; and/or
the PUSCH includes at least one of the following:
   any PUSCH;
   PUSCH scheduled by or associated with a preset PDCCH;
   dynamically scheduled PUSCH;
   terminal-specific PUSCH; and
   configured grant (Configured grant) PUSCH.

The preset PDCCH includes at least one of the following:
all PDCCHs, a PDCCH in a control resource set (Control Resource Set, CORESET) specific to the terminal, a PDCCH in a CORESET associated with only a UE-specific search space (UE-specific Search Space, USS), a PDCCH in a CORESET associated with a USS and a common search space CSS, a PDCCH in a CORESET associated with only a CSS, and a PDCCH in a CORESET other than CORESET#0.

In addition, the transmission mode of the target uplink channel may include: repetition (repetition) mode, multi-beam simultaneous transmission (for example, single frequency network (Single Frequency Network, SFN) transmission, frequency division multiplexing (Frequency Division Multiplexing, FDM) transmission/space division multiplexing (Space Division Multiplex, SDM)) mode, preset transmission mode (that is, single-beam transmission mode without repetition), or transmission mode of dynamically switching among the preset transmission mode, the repetition mode, and the multi-beam simultaneous transmission.

It should be noted that in the following embodiments, for ease of description, the multi-beam simultaneous transmission modes are collectively referred to as the SFN transmission mode. This is not specifically limited herein.

In the embodiments of this application, a solution is designed to apply a unified TCI state to uplink channels including PUCCH, PUSCH, and UL RS in mTRP.

In implementation, the number, type, and the like of TCI states required by the target uplink channel vary with the type, transmission mode, and/or the like of the target uplink channel. Therefore, there will be a case that the number of first TCI states indicated by the network-side device is greater than, less than, or equal to the number of TCI states required by the target uplink channel.

Option 1. In the process of determining the target TCI state of the target uplink channel based on the number of first TCI states, whether to update the TCI state of the target uplink channel and which TCI state to update may be determined based on whether the number of first TCI states is greater than or equal to the number of TCI states required by the target uplink channel. For example, in a case that the number of first TCI states is greater than or equal to K, K being the number of TCI states required by the target uplink channel, at least K first TCI states may be used to determine beam information of the target uplink channel (that is, updating all TCI states of the target uplink channel). In a case that the number of first TCI states is less than K, the target uplink channel may use its original TCI state (that is, not updating the TCI state of the target uplink channel), or the target uplink channel may use part of its original TCI state and the first TCI states (that is, updating part of the TCI state of the target uplink channel). Certainly, in a case that the number of first TCI states is less than K, it may further be determined to stop transmitting the target uplink channel, or switch the transmission mode of the target uplink channel to a transmission mode that matches the number of first TCI states (for example, it is assumed that the number of first TCI states is equal to one, and the transmission mode of the target uplink channel is using two TCI states for the repetition mode, or the multi-beam simultaneous transmission mode of FDM, SDM or SFN, the terminal may determine that the configuration of the repetition mode or multi-beam simultaneous transmission mode is ineffective, and thus changes the transmission mode of the target uplink channel to a single-beam transmission mode using only one TCI state).

Option 2. In the process of determining the target TCI state of the target uplink channel based on the arrangement order or arrangement positions of the first TCI states, a first TCI state arranged at a preset position (for example, the first or second position) is determined as the target TCI state of the target uplink channel. For example, in a case that the number of first TCI states is at least two and the target uplink channel needs to use two TCI states, first TCI states arranged at the first and second positions may be determined as the target TCI states of the target uplink channel.

In implementation, in a case that the network-side device activates or indicates the first TCI state, the network-side device indicates the TCI state by activating or indicating a TCI codepoint, where the TCI codepoint may correspond to one or more TCI states arranged in order. In this way, in a case that the TCI codepoint corresponds to multiple TCI states, the TCI states have their own arrangement order or arrangement position.

Option 3. In the process of determining the target TCI state of the target uplink channel based on the correspondence between the first TCI states and the first identifier information, a first TCI state corresponding to preset first identifier information may be determined as the target TCI state of the target uplink channel. For example, a first TCI state corresponding to CORESETPoolIndex of a preset value (which may be the smallest value) is determined as the target TCI state of the target uplink channel.

Option 4. In the process of determining the target TCI state of the target uplink channel base on the type of the target uplink channel, for different types of target uplink channels, target TCI states may be determined based on TCI states related to the channel types. For example, the target TCI state of a PUSCH or a UL RS resource is determined based on the TCI state of a PDCCH that schedules or triggers the PUSCH or the UL RS resource.

Option 5. In the process of determining the target TCI state of the target uplink channel based on the transmission mode of the target uplink channel, the number of TCI states required by the target uplink channel may be determined based on the transmission mode of the target uplink channel, so that the number of target TCI states may be determined.

Optionally, before the determining, by the terminal, a target TCI state of a target uplink channel based on target information, the method further includes:
receiving, by the terminal, second indication information from the network-side device, and determining the transmission mode of the target uplink channel based on the second indication information, where the transmission mode includes: a preset transmission mode, a repetition mode, a multi-beam simultaneous transmission mode, or a transmission mode dynamically switching among the preset transmission mode, the repetition mode, and the multi-beam simultaneous transmission mode, where the preset transmission mode is single-beam transmission without repetition.

In this embodiment, the network-side device may indicate the transmission mode of the target uplink channel. Furthermore, the second indication information may be used to indicate the transmission mode of the target uplink channel, or the second indication information is used to indicate the number of target TCI states. That the second indication information is used to indicate that the number of target TCI states may be understood as indirectly indicating the transmission mode of the target uplink channel. For example, the network-side device may use indication signaling for each PUCCH resource or PUCCH resource group (resource group) to indicate a transmission mode of using only single-TCI-state transmission (single-beam transmission), using multiple-TCI-state transmission (multi-beam transmission), dynamically changing the number of TCI states (that is, switching between single-beam transmission and multi-beam transmission), or the like. The indication signaling may explicitly indicate various transmission modes through RRC, MAC CE or DCI signaling, or indirectly indicate various transmission modes through the number of TCI states indicated by RRC, MAC CE or DCI signaling. For example, in a case that the number of repetitions is adapted to be greater than one in RRC, it is multi-TCI-state transmission. In a case that multiple TCI states corresponding to one codepoint are activated through a MAC CE, it is multi-TCI-state transmission. In a case that one or more TCI states are indicated in DCI, it is dynamic switching between single-TCI-state transmission and multi-TCI-state transmission.

Optionally, in a case that the target information includes the number of first TCI states, the determining, by the terminal, a target TCI state of a target uplink channel based on target information includes:
in a case that the terminal adopts single-beam transmission, if the number of first TCI states is one, determining, by the terminal, that the transmission mode of the target uplink channel is the single-beam transmission (that is, the target uplink channel directly uses the one first TCI state for single-beam transmission);
in a case that the terminal adopts single-beam transmission, if the number of first TCI states is at least two, determining, by the terminal, that the transmission mode of the target uplink channel is the single-beam transmission (that is, the target uplink channel uses one of the at least two first TCI states for single-beam transmission), a repetition mode, or a multi-beam simultaneous transmission mode (that is, the target uplink channel uses at least two or all of the at least two first TCI states for repetition or multi-beam simultaneous transmission);
in a case that the terminal adopts a repetition mode or multi-beam simultaneous transmission mode, if the number of first TCI states is one, determining, by the terminal, that the transmission mode of the target uplink channel is single-beam transmission (that is, the target uplink channel directly uses the one first TCI state for single-beam transmission without repetition), the repetition mode (that is, the target uplink channel directly uses the one first TCI state for repetition, the target uplink channel uses at least two original TCI states for repetition, or the target uplink channel uses some original TCI states and the one first TCI state for repetition), or the multi-beam simultaneous transmission mode (that is, the target uplink channel uses at least two original TCI states for multi-beam simultaneous transmission, or the target uplink channel uses some original TCI states and the one first TCI state for multi-beam simultaneous transmission); or
in a case that the terminal adopts a repetition mode or a multi-beam simultaneous transmission mode, if the number of first TCI states is at least two, determining, by the terminal, that the transmission mode of the target uplink channel is the repetition mode or the multi-beam simultaneous transmission mode (that is, the target uplink channel uses at least two or all of the at least two first TCI states for repetition or multi-beam simultaneous transmission).

Option 6. In the process of determining the target TCI state of the target uplink channel based on the time-domain behavior of the target uplink channel or the time-domain behavior of the information carried on the target uplink channel, whether the time-domain behavior of the target uplink channel is periodic or non-periodic may be determined, or whether the time-domain behavior of the information carried on the target uplink channel is periodic information or non-periodic information is determined. In this way, different target TCI states may be used for a periodic uplink channel and a non-periodic uplink channel, or different target TCI states may be used for an uplink channel carrying periodic information and an uplink channel carrying non-periodic information.

Optionally, in a case that the time-domain behavior of the target uplink channel is a periodic uplink channel or the time-domain behavior of the information carried on the target uplink channel is periodic information, the target TCI state includes at least one of the following:
a TCI state other than the first TCI states in a TCI state pool, or an original TCI state of the target uplink channel;
a first TCI state corresponding to the first identifier information associated with the target uplink channel;
a first TCI state indicated by third indication information from the network-side device; and
a second preset TCI state; where
the second preset TCI state includes at least one of the following:
   a first TCI state arranged at a preset position in all first TCI states; and
   a first TCI state corresponding to preset first identifier information.

The third indication information may be in configuration information of the target uplink channel. In this way, signaling overheads can be reduced. Certainly, the third indication information may alternatively be any new signaling. This is not specifically limited herein.

In implementation, the target uplink channel being a PUCCH resource carrying periodic information or a periodic PUCCH resource is used as an example. A manner of determining a target TCI state of the PUCCH may include at least one of the following:

Manner 1. The target TCI state includes other candidate TCI states in the TCI state pool than the first TCI states, or the target TCI state includes the original TCI state of the target uplink channel, meaning that the PUCCH does not use the first TCI states indicated by the network-side device.

Manner 2. The target TCI state includes the first TCI state corresponding to the first identifier information associated with (corresponding or belonging to) the target uplink channel. In this case, the target uplink channel has the associated, corresponding, or belonging (which is uniformly referred to as "associated with" in this embodiment of the application) first identifier information, and each first TCI state has its own corresponding first identifier information, so that the first TCI state corresponding to the same first identifier information as the target uplink channel may be determined and applied to the PUCCH.

Manner 3. The target TCI state includes the first TCI state indicated by the third indication information from the network-side device. For example, it is assumed that the third indication information is MAC CE or DCI signaling sent by the network-side device, a first signaling field in the signaling carries the first indication information used to indicate the first TCI state applied to the PUCCH. Alternatively, the third indication information may be in the configuration information of the target uplink channel. For example, the signaling may be configured in configuration information of the PUCCH resource, and the configuration may be used for only a periodic PUCCH resource or PUCCH resource carrying periodic information. For other non-periodic (for example, semi-persistently and dynamically scheduled) PUCCH resources, the third indication information may not be configured.

Manner 4. The target TCI state includes a second preset TCI state, where the second preset TCI state includes at least one of the following:
first TCI state arranged at a preset position in all the first TCI states and first TCI state corresponding to the preset first identifier information. For example, the target TCI state includes the 1st first TCI state, or a first TCI state corresponding to the 1st channel group, CORESET group, PUCCH resource group, or TRP ID (CORESETPoolIndex).

In implementation, the meaning and function of the second preset TCI state are the same as the meaning and function of the first preset TCI state mentioned in option 1 and option 2. Details are not repeated herein.

In this embodiment, a first TCI state in the unified TCI framework that may be shared by multiple channels or reference signal resources may be applied to a periodic uplink channel or an uplink channel resource carrying periodic information.

It should be noted that in a case that the target uplink channel is a PUSCH or UL RS resource and the PUSCH or UL RS is non-periodic, the target TCI state may be a TCI state of a PDCCH that schedules the PUSCH or UL RS resource.

Option 7. In the process of determining the target TCI state of the target uplink channel based on the number of first identifier information corresponding to the target uplink channel, the transmission mode of the target uplink channel may be determined based on the number of first identifier information corresponding to the target uplink channel. For example, a PUCCH configured to be the SFN transmission mode may correspond to two pieces of first identifier information such as channel groups, CORESET groups, CORESETPoolIndex, TRP IDs, or the like at the same time, and in this case, the two TCI states indicated by the network-side device and corresponding to the two pieces of first identifier information may be applied to an SFN PUCCH.

Option 8. In the process of determining the target TCI state of the target uplink channel based on the value of the first identifier information corresponding to the target uplink channel, the TCI state corresponding to the value of the first identifier information may be determined based on the correspondence between the first identifier information and the TCI states.

In implementation, options 1 to 8 may be combined with each other, that is, the terminal may determine the target TCI state based on one or at least two of options 1 to 8. For example, in a case that the first TCI states indicated by the network-side device can meet the requirements of the target uplink channel on the number of TCI states, channel type, first identifier information associated, the terminal may select, based on the target information, K of the first TCI states indicated by the network-side device as the target TCI state, K being the number of TCI states required by the target uplink channel.

In an optional embodiment, in a case that the number of first TCI states is greater than K, K being the number of TCI states required by the target uplink channel, the determining, by the terminal, a target TCI state of a target uplink channel based on target information includes:
determining, by the terminal, that K first TCI states arranged at preset positions are target TCI states of the target uplink channel; or
determining, by the terminal, the target TCI state of the target uplink channel based on indication of first indication information from the network-side device, where the first indication information is used to indicate K first TCI states.

The K first TCI states being arranged at the preset position may be understood as: after the at least two first TCI states indicated by the network-side device are arranged in the preset order, the preset position of each first TCI state is determined based on the arrangement position of each first TCI state, or each first TCI state corresponds to its own preset position identifier.

In this way, the terminal may determine the preset position according to a default rule, for example, determining the TCI state at the preset position as a TCI state arranged at the first position. Certainly, in implementation, the network-side device may alternatively indicate the preset position to the terminal, so that the terminal may obtain the preset position and then determine the first TCI state corresponding to the preset position.

In implementation, the preset order or positions of the first TCI states may be determined based on the order or positions of multiple first TCI states corresponding to a codepoint in a case that the first TCI states are activated through a MAC CE, or may be determined in a case that the first TCI state is indicated in DCI. This is not specifically limited herein.

In addition, that the terminal determines the target TCI state of the target uplink channel based on the indication of the first indication information from the network-side device can be understood as follows: the terminal receives the first indication information from the network-side device so that the network-side device indicates to the terminal which first TCI state(s) are specifically used by the target uplink channel of the terminal.

It should be noted that in a case that the target TCI state includes at least two first TCI states, in addition to indicating which two first TCI states, the first indication information may further indicate which first TCI states the two TCI states of the target uplink channel correspond to respectively. For example, it is assumed that the number of first TCI states is two, and the target uplink channel adopts the repetition mode. In a case that the first indication information is 00, the first of the two first TCI states may be selected for the repetition of the target uplink channel. In a case that the first indication information is 01, the second of the two first TCI states may be selected for the repetition of the target uplink channel. In a case that the first indication information is 10, the first of the two first TCI states is selected as the 1st TCI state used for the repetition of the target uplink channel, and the second of the two first TCI states is selected as the 2nd TCI state used for the repetition of the target uplink channel. In a case that the first indication information is 11, the second of the two first TCI states is selected as the 1st TCI state used for the repetition of the target uplink channel, and the first of the two first TCI states is selected as the 2nd TCI state used for the repetition of the target uplink channel.

In this embodiment, as compared with the embodiment that the terminal determines the K first TCI states arranged at the preset positions as the target TCI states of the target uplink channel, the network-side device can flexibly configure which TCI state(s) are specifically used by the target uplink channel of the terminal.

Optionally, the first indication information is carried in a first signaling field, the first signaling field being a signaling field in a medium access control (Medium Access Control, MAC) control element (Control Element, CE) signaling or DCI signaling.

In an embodiment, the first signaling field may be the signaling field in the MAC CE signaling used to activate the first TCI state.

In another embodiment, in a case that at least two TCI states are activated through the MAC CE signaling, the first signaling field may alternatively be the signaling field in the DCI signaling used to indicate the first TCI state.

In implementation, the first signaling field may be applied to DCI format 1_1 or DCI format 1_2.

In this implementation, a signaling field newly added in existing MAC CE signaling or DCI signaling may be used to carry the first indication information, reducing the signaling overheads.

It should be noted that in implementation, the first signaling field may be configured to be present or take effect only in a case that the first indication information is needed, and in other non-necessary cases, the first signaling field may not be configured or the first signaling field may be configured but not configured to take effect. For example, the first signaling field is effective or present in a case that a preset condition is met, the preset condition including at least one of the following:
the network-side device has configured the first signaling field;
the network-side device has indicated at least two first TCI states through DCI signaling; and
in a TCI codepoint activated by the network-side device through a MAC CE, at least one codepoint corresponds to at least two TCI states.

In this embodiment, whether to configure the first signaling field or whether the first signaling field is configured to take effect may be determined through the preset condition, so that only in a case that the first signaling field is configured and the first signaling field takes effect, the terminal performs detection for the first indication information carried in the first signaling field. This can reduce unnecessary computing power and resource consumed by the terminal.

Certainly, in implementation, there may further be a case that the first TCI states indicated by the network-side device cannot meet the requirements of the target uplink channel on the number, type, associated first identifier information of the TCI state. In this case, the determining, by the terminal, a target TCI state of a target uplink channel based on target information may include at least one of the following: the terminal may determine to use the original TCI state for the target uplink channel (that is, the TCI state of the target uplink channel is not updated), update only one or part of the original TCI state of the target uplink channel to the first TCI state, stop transmitting the target uplink channel based on original configuration information of the target uplink channel (for example, repetition or SFN transmission), or the like.

In an optional embodiment, in a case that the target uplink channel has M TCI states, if the number of first TCI states is at least M, the target TCI state is at least M first TCI states, M being an integer greater than or equal to 2;
in a case that the target uplink channel has M TCI states, if N is less than M, the target TCI state is M original TCI states of the target uplink channel, the target TCI state is (M-N) original TCI states and the N first TCI states of the target uplink channel, or the target TCI states are the N first TCI states; or
in a case that the target uplink channel has one TCI state, if the number of first TCI states is at least one, the target TCI state is at least one first TCI state.

In a case that the target uplink channel has M TCI states, if N is less than M, the target TCI state is M original TCI states of the target uplink channel. That is, the TCI state of the target uplink channel may not be updated.

In a case that the target uplink channel has M TCI states, if N is less than M, the target TCI state is (M-N) original TCI states and the N first TCI states of the target uplink channel. Only N of M original TCI states of the target uplink channel may be updated and the remaining (M-N) TCI states are not updated.

In a case that the target uplink channel has M TCI states, if N is less than M, the target TCI state is the N first TCI states. In a case that the target uplink channel uses two uplink TCI states for transmission (for example, repetition or SFN transmission), if the number of first TCI states is one, it may be determined that the repetition configuration or SFN configuration is ineffective, so that one first TCI state is used for continual repetition of the target uplink channel, one first TCI state is used for transmitting the target uplink channel, or the transmission of the target uplink channel is stopped.

In an optional embodiment, in a case that the number of first TCI states is greater than 1:
the target TCI state includes at least one of the following:
all first TCI states;
at least two first TCI states indicated by the network-side device of all the first TCI states, configured for the target uplink channel in a repetition mode or multi-beam simultaneous transmission mode;
one first TCI state indicated by the network-side device of all the first TCI states;
a first TCI state the same as a TCI state of a first PDCCH, where the first PDCCH is used to schedule or trigger the target uplink channel, the first PDCCH is used to schedule a target PDSCH and feedback information for the target PDSCH is carried on the target uplink channel, or the first PDCCH is associated with the target uplink channel;
a first TCI state corresponding to the first identifier information associated with the target uplink channel;
first TCI states of repetitions of the target uplink channel, where the first TCI states of the repetitions of the target uplink channel correspond to different first identifier information;
at least two first TCI states corresponding to at least two pieces of first identifier information, where the target uplink channel is associated with the at least two pieces of first identifier information;
at least one first TCI state corresponding to one piece of first identifier information, where the target uplink channel is associated with one piece of first identifier information (Usually, one piece of first identifier information corresponds to one first TCI state. In a case that one piece of first identifier information corresponds to at least two first TCI states, it may be understood that one TRP corresponds to two TCI states, and angles of the two TCI states are close. In this case, the first identifier information may be CORESETPoolIndex or channel group identifier information); and
at least two first TCI states determined based on preset correspondence.

In implementation, PUCCH repetition and/or PUSCH repetition may be performed on the target uplink channel in the repetition mode.

In the related art, 3GPP R17 supports dynamic scheduling of PUSCH repetition through one piece of DCI in a time division multiplexing (TDM) manner in a multi-TRP scenario.

Multiple transmit beams (spatial relation) corresponding to different TRPs are used for repetition of each PUSCH, so as to improve the reliability of PUSCH transmission.

For Type A (slot-level) PUSCH repetition, one PUSCH repetition refers to one PUSCH transmission occasion in each slot; and for Type B PUSCH repetition, one PUSCH repetition is nominal repetition (nominal repetition).

Two sets of beams (or spatial relations), precoding matrices (TPMI), power control parameters, and the like may be indicated in DCI, and a new two-bit indication field is added in the DCI to support dynamic switching between STRP and MTRP and flexible exchange of sending order of PUSCH repetition beams.

The mapping relationship between PUSCH repetitions and beams may be configured through RRC parameters as cyclic mapping (cyclic mapping) and sequential mapping (sequential mapping).

In addition, in the related art, 3GPP R17 further supports the transmission solution of PUCCH repetition in multi-TRP scenarios.

If a network activates two beams (spatial relation) for a PUCCH resource or PUCCH group, each repetition of the PUCCH is sent using two beams.

The mapping relationships between PUCCH repetitions and beams may be configured through RRC parameters as cyclic mapping (cyclic mapping) and sequential mapping (sequential mapping).

In a first aspect, in this embodiment of this application, a PUCCH in the repetition or SFN mode is used as an example, and a target TCI state used for the PUCCH can be determined in any of the following manners:

Manner 1. At least two first TCI states indicated by the network-side device (that is, all the first TCI states) are always used.

Manner 2. The network-side device indicates at least two first TCI states of all the first TCI states. That is to say, in a case of having indicated multiple first TCI states, the network-side device further indicates at least two first TCI states of the multiple first TCI states. The specific manner of further indicating the at least two first TCI states of the multiple first TCI states can be implemented through the first indication information in the foregoing embodiment, for example, the first signaling field in the MAC CE or DCI signaling. Details are not repeated herein.

Manner 3. The PUCCH uses a TCI state of a preset PDCCH (that is, the first PDCCH). The preset PDCCH may be a PDCCH that schedules/triggers the PUCCH, the PUCCH carrying feedback information for example, hybrid automatic repeat request acknowledgment (Hybrid Automatic Repeat Request Acknowledgement, HARQ-ACK) for a PDSCH scheduled by the preset PDCCH, or a PDCCH associated with the PUCCH.

Manner 4. The first TCI state indicated by the network-side device corresponds to the first identifier information (for example, channel group, CORESET group, PUCCH group, TRP ID, or CORESETPoolIndex). For example, based on the arrangement order or arrangement positions of the N first TCI states, the N first TCI states are made to correspond to the N first identifier information one by one. In this way, based on the channel group, CORESET group, PUCCH group, or TRP ID that the PUCCH corresponds to, is associated with or belongs to, the first TCI state corresponding to the first identifier information associated with the PUCCH can be determined.

It should be noted that in a case that the PUCCH corresponds to, is associated with or belongs to one piece of first identifier information, it can be determined that the target TCI state includes the one first TCI state. In a case that the PUCCH corresponds to, is associated with or belongs to at least two pieces of first identifier information (for example, the PUCCH uses a repetition mode), it can be determined that the target TCI state includes at least two first TCI states corresponding to the at least two pieces of first identifier information one by one, so that the at least two first TCI states respectively serve as TCI states for repetitions of the PUCCH. That is, the TCI states for the repetitions of the PUCCH corresponds to different channel groups/CORESET groups/PUCCH groups/TRP IDs/CORESETPoolIndexes. Alternatively, in a case of PUCCH SFN, at least two first TCI states for the PUCCH SFN can be determined based on the at least two pieces of first identifier information that the PUCCH corresponds to, is associated with or belongs to (first TCI states corresponds to different first identifier information).

Manner 5. Because there is correspondence between at least two first TCI states indicated by the network-side device and repetitions of the PUCCH, the TCI state for each repetition of the PUCCH can be determined based on the correspondence.

Manner 6. In a case that the target uplink channel is associated with at least two pieces of first identifier information, the target TCI state includes at least two first TCI states corresponding to the at least two pieces of first identifier information; and
in a case that the target uplink channel is associated with one piece of first identifier information, the target TCI state includes at least one first TCI state corresponding to the one piece of first identifier information.

For example, it is assumed that the network-side device has configured a PUCCH resource group (group) and has indicated two first TCI states, which are TCI state 1 and TCI state 2, respectively. In a case that group 1 corresponds to TCI state 1, group 2 corresponds to TCI state 2, and group 3 corresponds to TCI state 1 and TCI state 2, the network-side device can make a PUCCH transmission switch between sTRP and mTRP by scheduling PUCCH resources belonging to different PUCCH resource groups and determine TCI states of the PUCCH resources. Correspondence between PUCCH resource groups and TCI states can be determined in the following manner: (1) The network-side device explicitly configures the correspondence through signaling; or (2) implicit correspondence through the order or position of multiple PUCCH resource groups and multiple TCI states. For example, the 1st TCI state corresponds to the 1st PUCCH resource group, and the 2nd TCI state corresponds to the 2nd PUCCH resource group. In addition, in implementation, one PUCCH resource may alternatively be configured in two PUCCH resource groups, so that the PUCCH resource can correspond to two TCI states.

Manner 7. In a case that the transmission mode of the target uplink channel is the repetition mode or multi-beam simultaneous transmission mode, the target TCI state includes at least two first TCI states determined based on preset correspondence.

The preset correspondence includes:
the arrangement order or arrangement positions of the first TCI states correspond to TCI states of repetitions of the target uplink channel; or
the arrangement order or arrangement positions of the first TCI states correspond to each TCI state of the target uplink channel.

In implementation, the preset correspondence may be an arrangement order or arrangement positions of TCI states or the TCI state IDs, which correspond to time division multiplexing (Time Division Multiplexing, TDM) transmission order and the like of the PUCCH repetition. This is not specifically limited herein.

This embodiment provides a unified TCI state that can be applied to repetition or SFN in mTRP scenarios.

In implementation, multi-TRP transmission can be divided into two cases: single DCI scheduling (sDCI) and multi-DCI (mDCI) scheduling by control signaling.

Multi-DCI (multi-DCI, mDCI) scheduling: Each TRP sends its own PDCCH, each PDCCH schedules its own PDSCH, and a plurality of CORESETs configured for the UE are associated with different RRC parameters CORESETPoolIndex, so that CORESETPoolIndex correspond to different TRPs. In this case, PDSCHs scheduled by two TRPs can completely overlap, partially overlap or do not overlap, and PUSCHs scheduled by the two TRPs cannot overlap.

Single DCI (single DCI, sDCI) scheduling: One TRP sends a PDCCH to schedule a PDSCH. In this case, multiple CORESETs configured for the UE cannot be associated with different CORESETPoolIndex. In this case, A maximum of eight codepoints (codepoint) can be activated in a MAC CE, and at least one of the codepoints corresponds to two TCI states. In a case that a codepoint indicated by a TCI field in DCI corresponds to two TCI states and it is indicated that one of the TCI states includes "QCL-TypeD", it means that a scheduled PDSCH comes from two TRPs. The PDSCH includes multiple transmission schemes. For example, data of different layers of the PDSCH corresponds to two TCI states (scheme 1a, space division multiplexing (Space Division Multiplexing, SDM)). Alternatively, data on different frequency domain subcarriers corresponds to two TCI states (scheme 2a/2b, frequency division multiplexing (Frequency Division Multiplex, FDM)). Alternatively, time domain repetitions come from different TRPs (scheme 3/4, time division multiplexing (Time Division Multiplexing, TDM)). The specific transmission scheme of the PDSCH is determined by other manner. For example, it is configured through high-layer parameters or determined through DCI to indicate the number of DMRS code domain multiplexing (Code Domain Multiplexing, CDM) groups by DCI. Details are not described herein.

In this embodiment of this application, for mDCI, a non-periodic PUCCH resource can be grouped with a scheduling (scheduling) PDCCH and they correspond to the same TRP. In this way, for a joint (joint) TCI state, the PUCCH can use the same beam as the scheduling PDCCH (PUCCH follow the scheduling PDCCH beam). For separate TCI states, the PUCCH can use an UL beam corresponding to a DL beam of the scheduling PDCCH (for separate TCI, PUCCH use UL beam corresponding to scheduling PDCCH DL beam). That is to say, in this embodiment, a unified TCI state that can be applied to sDCI scheduling and mDCI scheduling in mTRP scenarios is provided.

In a second aspect, in this embodiment of this application, a PUSCH in the repetition or SFN mode is used as an example, and a target TCI state used for the PUSCH can be determined in any of the following manners:

Manner 1. At least two first TCI states indicated by the network-side device (that is, all the first TCI states) are always used. For example, it is assumed that the network-side device has indicated two first TCI states, the two TCI states for the PUSCH configured with the repetition/SFN transmission mode are the two first TCI states indicated by the network-side device.

Manner 2. The network-side device indicates at least two first TCI states of all the first TCI states. That is to say, in a case of having indicated multiple first TCI states, the network-side device further indicates at least two first TCI states of the multiple first TCI states. For example, a first signaling field is added in DCI signaling for indicating N joint TCI states/separate UL TCI states, to indicate which TCI state or two TCI states in the N joint TCI states/separate UL TCI states are used by the PUSCH. In a case of two TCI states, the first signaling field may further indicate the use order of the TCI states. For example, based on the method listed in method 5 of determining the target TCI state of the PUCCH, the terminal may determine, based on the preset correspondence, the at least two first TCI states indicated by the network-side device as at least two TCI states of the PUSCH in the repetition/SFN transmission mode.

Manner 3. The PUSCH configured with the repetition/SFN transmission mode may correspond to two pieces of first identifier information (for example, channel group, CORESET group, PUCCH resource group or TRP ID) at the same time. In this case, the two TCI states indicated by the network-side device and corresponding to the two pieces of first identifier information may be applied to the repetition/SFN PUSCH. The order or position of the TCI states corresponds to magnitudes of the first identifier information one by one. Certainly, in a case that the PUSCH corresponds to one piece of first identifier information, one TCI state corresponding to the first identifier information is used. For example, use the one TCI state to continue repetition, end the repetition/SFN transmission mode, stop the transmission of the PUSCH, or the like.

That is, in a case that the target uplink channel is associated with at least two pieces of first identifier information, the target TCI state includes at least two first TCI states corresponding to the at least two pieces of first identifier information. In a case that the target uplink channel is associated with one piece of first identifier information, the target TCI state includes one first TCI state corresponding to the one piece of first identifier information.

Manner 4. At least two first TCI states indicated by the network-side device are used as two TCI states of the repetition/SFN PUSCH based on the preset correspondence. The preset correspondence may be the two first TCI states indicated by the network-side device and the two TCI states of the repetition/SFN PUSCH have corresponding arrangement order or arrangement positions. The meaning of the preset correspondence is the same as the preset correspondence listed in method 5 of determining the target TCI state used by the PUCCH. Details are not repeated herein again.

In an optional embodiment, in a case that the number of first TCI states is greater than 1, if the transmission mode of the target uplink channel is a preset transmission mode, the target TCI state includes a first preset TCI state, where the first preset TCI state includes at least one of the following:
a first TCI state arranged at a preset position in all first TCI states;
a first TCI state corresponding to preset first identifier information; and
a first TCI state indicated by the network-side device of all first TCI states.

In implementation, the preset transmission mode specifically refers to the single-beam transmission mode without repetition. For example, the target uplink channel using the preset transmission mode may be a regular single-beam transmission without repetition and without SFN, which may be sent to only one TRP.

Option 1. The first TCI state of all the first TCI states arranged at the preset position may be at least one first TCI state arranged at any position such as the first position, the second position, or the last position. The preset position may be determined by any one or more of the following methods: protocol agreement, setting at the first position by default, network-side device update, and the like. Details are not specifically limited herein.

Option 2. The preset first identifier information may be a preset channel group, preset CORESET group, preset PUCCH resource group or preset TRP ID (CORESETPoolIndex), for example, the 1st channel group, the 1st CORESET group, the 1st PUCCH resource group or the 1st TRP ID. In implementation, the preset first identifier information may be determined by any one or more of the following methods: protocol agreement, the first one by default, network-side device update, and the like. Details are not specifically limited herein.

Option 3. The first TCI state indicated by the network-side device of all the first TCI states. This can be understood as follows: In addition to indicating at least two first TCI states, the network-side device further indicates one or at least two of the at least two first TCI states. For example, the network-side device further indicates the target TCI state of the at least two first TCI states through the first indication information. For the meaning and function of the first indication information, reference may be made to the explanation of the first indication information in the foregoing embodiment. Details are not repeated herein again.

In this embodiment, a first TCI state that may be shared by multiple channels or reference signal resources in the unified TCI framework may be applied to a PUCCH and/or PUSCH in a preset transmission mode.

In an optional embodiment, in a case that the number of first TCI states is greater than 1, if the type of the target uplink channel is PUSCH or UL RS resource or UL RS resource set, the target TCI state includes at least one of the following:
a first TCI state corresponding to a first codepoint or at least one of the first TCI state corresponding to the first codepoint, where the first codepoint is a codepoint indicated by a TCI field in DCI indicating the first TCI state;
a first TCI state corresponding to preset first identifier information;
a first TCI state the same as a TCI state of a PDCCH in which DCI scheduling the target uplink channel is;
a first TCI state corresponding to the first identifier information associated with a PDCCH in which a DCI scheduling the target uplink channel is; and
a first TCI state corresponding to the first identifier information associated with the target uplink channel.

Option 1. The first codepoint is a TCI codepoint indicated by the TCI field in DCI signaling. In a case that the first codepoint corresponds to one first TCI state, the target TCI state is the one first TCI state. In a case that the first codepoint corresponds to two first TCI states, the target TCI state may be one or two of the two first TCI states (for example, a TCI state arranged at a preset position). Specifically, in a case that the PUSCH has two TCI states, it may be determined that the target TCI state may be the two first TCI states. In a case that the PUSCH has one TCI state, it may be determined that the target TCI state may be one of the two first TCI states;

Option 2. First TCI states may correspond to their respective first identifier information, for example, channel groups, CORESET groups or TRP IDs. The preset first identifier information may be the 1st channel group/1st CORESET group/1st TRP ID, or may be first identifier information of another preset order or position such as the 2nd channel group/2nd CORESET group/2nd TRP ID. In implementation, the preset first identifier information may be first identifier information determined according to a default rule or an indication of the network-side device, and after the first identifier information is determined, a TCI state corresponding to the first identifier information may be applied to the PUSCH.

Option 3. In implementation, it may be determined that the target TCI state includes the first TCI state the same as a TCI state of a PDCCH in which DCI scheduling or triggering the target uplink channel is located only in a case that the PDCCH in which the DCI scheduling or triggering the target uplink channel located is has the same transmission mode as the target uplink channel. For example, in a case that the PUSCH is in the SFN mode, the PDCCH also needs to be in the SFN mode to apply option 3.

Certainly, in a case that the target uplink channel and the PDCCH in which the DCI scheduling the target uplink channel is located use different transmission modes, the target uplink channel may also use the TCI state of the PDCCH in which the DCI scheduling the target uplink channel is located or part of the TCI state of the PDCCH in which the DCI of the target uplink channel is located.

Optionally, in a case that a transmission mode of a PDCCH in which DCI indicating the first TCI state is or PDCCH scheduling the target uplink channel is a repetition mode or multi-beam simultaneous transmission mode, the target TCI state includes:
a first TCI state the same as a TCI state of the PDCCH in repetition or multi-beam simultaneous transmission, or at least one first TCI state in a first TCI state used by the PDCCH in repetition or multi-beam simultaneous transmission.

In this embodiment, in a case that the transmission mode of the PDCCH in which the DCI indicating the first TCI state is located or the PDCCH scheduling the target uplink channel is the repetition mode or the multi-beam simultaneous transmission mode, the PDCCH in repetition or multi-beam simultaneous transmission may have at least two TCI states. In this case, the target uplink channel may use one or at least two of the at least two TCI states. For example, in a case that the PUSCH needs two TCI states, the PUSCH may use the two TCI states of the PDCCH in repetition or multi-beam simultaneous transmission.

Option 4. The target TCI state may be a first TCI state corresponding to a channel group/CORESET group/TRP ID (CORESETPoolIndex) associated with, corresponding to or belonging to a PDCCH in which DCI scheduling the target uplink channel is located.

Option 5. The target uplink channel may alternatively use a first TCI state corresponding to a channel group/TRP ID (CORESETPoolIndex) associated with, corresponding to or belonging to itself.

With the foregoing embodiment, the unified TCI framework that is indicated by the network-side device and that can be used in mTRP scenarios can be applied to PUSCHs, or UL RS resources or UL RS resource sets.

In an optional embodiment, in a case that the number of first TCI states is greater than 1, if the type of the target uplink channel is PUSCH in uplink configured grant type 1, the target TCI state includes at least one of the following:
a first TCI state corresponding to preset CORESETPoolIndex, where the preset CORESETPoolIndex includes CORESETPoolIndex corresponding to signaling carrying PUSCH configuration information, or the preset CORESETPoolIndex is CORESETPoolIndex with a preset value;
a first TCI state arranged at a preset position in all the first TCI states;
a first TCI state corresponding to a TCI state identifier or CORESETPoolIndex indicated by configuration information of the PUSCH in uplink configured grant type 1;
a first TCI state of a preset SRS resource, where the preset SRS resource is an SRS resource indicated by a sounding reference signal SRS resource indicator SRI in configuration information of the PUSCH in uplink configured grant type 1; and
at least one first TCI state determined based on a power control parameter in configuration information of the PUSCH in uplink configured grant type 1.

Option 1. The preset CORESETPoolIndex may be used as a preset TRP ID, where the preset TRP may be a TRP corresponding to signaling used for sending PUSCH configuration information, or the preset TRP is a TRP with a minimum ID, such as minimum CORESETPoolIndex (that is, CORESETPoolIndex of a preset value may be CORESETPoolIndex of a minimum value). Option 1 can be used for the mDCI mode.

Option 2. The option that the PUSCH configured with UL configured grant type 1 uses the first TCI state arranged at the preset position of all the first TCI states may be applied to the sDCI mode and the mDCI mode.

Option 3. The network-side device may indicate, to the terminal through the first signaling (or indicate the TCI state in the same way as the first signaling field in the above embodiment), which TCI state may be used by the PUSCH configured with UL configured grant type 1 or a TCI state corresponding to which TRP ID (CORESETPoolIndex) may be used by the PUSCH configured with UL configured grant type 1. The first signaling may be configured in configuration information of the CG type 1 PUSCH, such as configuration index (config index) information of a configured grant. For example, the first signaling may use various bit sequence values to represent which TCI state or two TCI states are used. The bit sequence values may be: unconfigured or default first signaling bit, 0 or 1 indicating using a TCI state, and 00/01/10/11 indicating using one or two TCI states (even indicating the use order of the two TCI states). Correspondence between specific bits and indication schemes of the first signaling is similar to that of the first indication information in the first signaling field. Details are not repeated herein again. Option 3 may be used for the sDCI mode and the mDCI mode.

Option 4. For the PUSCH configured with UL configured grant type 1, parameters in the configuration information may be used to determine the target TCI state, for example, a TCI state of an SRS resource indicated by a sounding reference signal (Sounding Reference Signal, SRS) resource indicator (SRS resource indicator, SRI). Option 4 may be used for the sDCI mode and the mDCI mode.

Option 5. The at least one of the first TCI states determined based on the power control parameters in the configuration information of the PUSCH of the uplink configured grant type 1 may be one (one by default or one indicated through the first signaling) or at least two TCI states that are of the at least two first TCI states indicated by the network-side device and that are determined for use based on the number of power control parameters (for example, open-loop receive power target value P0, partial pathloss compensation factor α, closed loop control index (Close Loop Index, CLI)) in the configuration information. It should be noted that in implementation, the configured grant CG PUSCH does not use a power control (Power control, PC) parameter set (setting) associated with the at least two first TCI states indicated by the network-side device. Option 5 may be used for the sDCI mode and the mDCI mode.

With the foregoing embodiment, the unified TCI framework that is indicated by the network-side device and that can be used in mTRP scenarios can be applied to configured grant PUSCHs.

In an optional embodiment, in a case that the number of first TCI states is greater than on and the type of the target uplink channel is UL RS resource or resource set, the target TCI state includes the following:

A first TCI state associated with same first identifier information as the UL RS resource or resource set. For example, the two first TCI states indicated by the network-side device are respectively associated with their respective first identifier information (channel groups, CORESET groups, PUCCH resource groups or TRP IDs). The UL RS resource or resource set may determine, based on its associated first identifier information, which one of the two first TCI states is used by the UL RS resource or resource set, that is, using a first TCI state corresponding to first identifier information associated with the UL RS resource or resource set.

A first TCI state the same as a TCI state of a PDCCH triggering the UL RS resource or resource set. In implementation, the UL RS resource or resource set may be non-periodic.

A first TCI state corresponding to the UL RS resource or resource set. Each UL RS resource or resource set has its own corresponding TCI state. For example, the two first TCI states indicated by the network-side device correspond to their respective UL RS resources or resource sets. In a case that the network has configured two UL RS resource sets, the 1st first TCI state is used for all UL RS resources in the 1st UL RS resource set, and the 2nd first TCI state is used for all UL RS resources in the 2nd UL RS resource set. In a case that the network has configured one UL RS resource set and the resource set contains two UL RS resources, the 1st first TCI state is used for the 1st UL RS resource in the UL RS resource set, and the 2nd first TCI state is used for the 2nd UL RS resource in the UL RS resource set.

In this embodiment, the unified TCI framework that is indicated by the network-side device and that can be used in mTRP scenarios can be applied to UL RS resources or resource sets.

It should be noted that in implementation, there is further a case that the network-side device indicates only one first TCI state. For example, the network-side device indicates one joint TCI state or one separate UL TCI state as the first TCI state. In this case, a PDCCH in which DCI indicating the first TCI state is located may use various transmission modes (for example, preset transmission mode (non-repetition and non-SFN), SFN transmission mode, and repetition mode).

Under this scenario, schemes of determining beam information of various uplink channels are as follows.

In an optional embodiment, in a case that the number of first TCI states is equal to 1, if the transmission mode of the target uplink channel is a repetition mode or multi-beam simultaneous transmission mode, the determining, by the terminal, a target TCI state of a target uplink channel based on target information includes at least one of the following:
determining, by the terminal, that a configuration of the repetition mode or simultaneous transmission using at least two uplink TCI states of the target uplink channel is ineffective;
determining, by the terminal, that the target uplink channel is transmitted based on the first TCI state;
determining, by the terminal, that the target TCI state includes at least two original TCI states of the target uplink channel; and
determining, by the terminal, to update a third preset TCI state in at least two original TCI states of the target uplink channel to the first TCI state; where the third preset TCI state corresponds to the same first identifier information as the first TCI state, the preset TCI state is one located at a preset position in the at least two original TCI states of the target uplink channel, or the third preset TCI state is associated with the first TCI state.

In this embodiment, it is assumed that the transmission mode of the target uplink channel is the repetition mode or the SFN transmission mode, the target uplink channel originally uses two TCI states, and the network-side device indicates only one first TCI state. The target uplink channel being a PUCCH is used as an example. The following manner may be used to determine the target TCI state of the PUCCH (It should be noted that this embodiment may further be applicable to other types of channels such as PUSCH. Herein, the PUCCH is used as an example for description but does not constitute a specific limitation).
(1) For the PUCCH in the repetition/SFN transmission mode, in a case that two TCI states are originally used and the network-side device indicates one first TCI state, the PUCCH repetition/SFN configuration is ineffective, that is, repetition=1 or the PUCCH is no longer sent.
(2) For the PUCCH in the repetition mode, one first TCI state indicated by the network-side device may be used to continue the PUCCH repetition.
(3) The TCI state is not updated for the PUCCH in the repetition/SFN mode, that is, two original TCI states of the PUCCH in repetition/SFN are used.
(4) A third preset TCI state of two original TCI states of the PUCCH in repetition/SFN is updated to one first TCI state indicated by the network-side device. The third preset TCI state may be a TCI state satisfying at least one of the following conditions:
   corresponding to same first identifier information (channel group, CORESET group, PUCCH resource group or TRP ID) as the 1 st first TCI state indicated by the network-side device;
   one (for example, the first one) of two original TCI states of the PUCCH in repetition/SFN; and
   TCI state having a correspondence with the 1st first TCI state indicated by the network-side device in original TCI states.

In this embodiment, for a case that the network-side device indicates only one first TCI state, which is therefore does not meet the requirement of the PUCCH in repetition/SFN on the number of TCI states, a unified TCI framework that is indicated by the network-side device and that can be applied to mTRP scenarios may be applied to the PUCCH in repetition/SFN in the foregoing manner.

In an optional embodiment, in a case that the number of first TCI states is equal to 1, the determining, by the terminal, a target TCI state of a target uplink channel based on target information includes at least one of the following:
in a case that the target uplink channel corresponds to the same first identifier information as the first TCI state, determining, by the terminal, that the target TCI state includes the first TCI state;
in a case that the target uplink channel and the first TCI state correspond to different first identifier information, determining, by the terminal, that the target TCI state includes an original TCI state of the target uplink channel or that the target uplink channel stops transmission; and
determining, by the terminal, that the target TCI state includes a TCI state of a PDCCH scheduling or triggering the target uplink channel.

In this embodiment, it is assumed that the target uplink channel is a PUSCH or a UL RS resource. In a case that the network-side device indicates only one first TCI state, the following manner may be used to determine a target TCI state of the PUSCH or the UL RS resource.

Option 1. In a case that the target uplink channel and the first TCI state correspond to the same first identifier information, the terminal determines that the target TCI state includes the first TCI state. In a case that the target uplink channel and the first TCI state correspond to different first identifier information, the terminal determines that the target TCI state includes the original TCI state of the target uplink channel or determines to stop transmission of the target uplink channel, which may be understood as: determining whether to perform TCI state update based on the first identifier information (for example, channel group, CORESET group, PUCCH resource group or TRP ID) corresponding to the PUSCH or the UL RS resource. For example, in a case that the PUSCH or the UL RS resource corresponds to the same first identifier information as one first TCI state indicated by the network-side device, the TCI state of the PUSCH or the UL RS resource may be updated to the one first TCI state indicated by the network-side device. In a case that the PUSCH or the UL RS resource corresponds to first identifier information different from one first TCI state indicated by the network-side device, the TCI state of the PUSCH or the UL RS resource may not be updated (that is, the target TCI state of the PUSCH or the UL RS resource is still the original TCI state of the PUSCH or the UL RS resource) or the transmission is stopped. In other words, the one first TCI state indicated by the network-side device may only be used for its associated channel group, CORESET group, PUCCH resource group or TRP ID. For a channel and an RS corresponding to another channel group, CORESET group, PUCCH resource group or TRP ID that is not associated with the one first TCI state indicated by the network-side device, the TCI state update may not be performed, or the transmission may be stopped.

It should be noted that option 1 may further be applied to determine the target TCI state of the PUCCH. Details are not repeated herein again.

Option 2. The TCI state of the PDCCH scheduling or triggering the target uplink channel may be understood as a TCI state of the PDCCH scheduling the PUSCH or triggering the UL RS resource. In implementation, the TCI state of the PDCCH triggering the UL RS resource may be used in a case that the UL RS resource is a non-periodic resource.

In this embodiment, there is also a case that the PUSCH or UL RS resource originally uses two TCI states for transmission, while the network-side device indicates only one first TCI state. In this case, the transmission mode of the PUSCH or UL RS resource may be changed. For example, the transmission mode of the PUSCH or UL RS resource is changed from the repetition mode or multi-beam simultaneous transmission mode that requires two TCI states for transmission to the single-beam transmission mode that requires only one TCI state for transmission. Alternatively, the two original TCI states of the PUSCH or UL RS resource are used for transmission, or one original TCI state of the PUSCH or UL RS resource and the one first TCI state indicated by the network-side device are used for transmission.

In an optional embodiment, in a case that the number of first TCI states is equal to 1, if the target uplink channel originally has at least two TCI states, the determining, by the terminal, a target TCI state of a target uplink channel based on target information includes:
determining, by the terminal, that the target TCI state is the first TCI state;
determining, by the terminal, that the target TCI state includes at least two original TCI states of the target uplink channel; or
determining, by the terminal, to update a fourth preset TCI state in at least two original TCI states of the target uplink channel to the first TCI state; where the fourth preset TCI state corresponds to the same first identifier information as the first TCI state, the fourth preset TCI state is one arranged at a preset position in the at least two original TCI states of the target uplink channel, or the fourth preset TCI state is associated with the first TCI state.

In this embodiment, it is assumed that the target uplink channel is a PUSCH or a UL RS resource or a UL RS resource set, the target uplink channel originally uses two TCI states for transmission, and the network-side device indicates only one first TCI state. The one TCI state indicated by the network may be directly applied (that is, changed to the single-beam transmission mode) or the fourth preset TCI state is updated to the one TCI state indicated by the network, or no TCI state update is performed (that is, the one original TCI state of the PUSCH or the UL RS resource is still used for transmission).

Similar to the third preset TCI state, the fourth preset TCI state may correspond to same first identifier information as the one first TCI state indicated by the network-side device (for example, channel group, CORESET group, PUCCH resource group or TRP ID), the fourth preset TCI state may be one located at the preset position (for example, the first position) of the two TCI states originally used by the target uplink channel, or the fourth preset TCI state may be associated with the one first TCI state indicated by the network-side device.

Optionally, in a case that the type of the target uplink channel is UL RS resource or resource set, the determining, by the terminal, that the target TCI state is the first TCI state includes:
determining, by the terminal, that target TCI states of all RS resources in UL RS resources or resource set associated with the first TCI state include the first TCI state; or
determining, by the terminal, that target TCI states of all RS resources in UL RS resources or resource set corresponding to the same first identifier information as the first TCI state include the first TCI state.

In this embodiment, for the UL RS resource or the resource set, only TCI states of all RS resources in a UL RS resource or a resource set having an association relationship with the one first TCI state indicated by the network-side device are updated.

In an optional embodiment, in a case that the transmission mode of the target uplink channel is a repetition mode, or the type of the target uplink channel is PUSCH or UL RS resource and target DCI scheduling the target uplink channel simultaneously schedules at least two PUSCHs or at least two UL RS resources;
after the terminal obtains the common beam information indicated by the network-side device, the method further includes:
sending, by the terminal, first feedback information to the network-side device at a first occasion, the first feedback information being used to indicate that the terminal has correctly received the common beam information; and
determining, by the terminal, that repetition of the target uplink channel in a slot after a second occasion or a PUSCH or UL RS resource scheduled by the target DCI in a slot after the second occasion uses the common beam information for transmission, where a time difference between the second occasion and the first occasion is a first preset duration, and the second occasion is later than the first occasion.

The second occasion may be an occasion when the common beam information takes effect. In other words, the first preset duration may be a preset duration or a duration configured by the network-side device, and may specifically include a duration from an occasion when the first feedback information is sent from the terminal to the network-side device to an occasion when the network-side device and the terminal start to apply the common beam information. In this way, the common beam information may be defaulted to take effect after an interval of the first preset duration since the terminal sends the first feedback information. Correspondingly, after receiving the first feedback information fed back by the terminal, the network-side device may determine, based on the first feedback information, that the terminal has correctly received the common beam information, and the common beam information may be defaulted to take effect after an interval of the first preset duration since the first feedback information is received.

In implementation, in a case that a channel or reference signal corresponding to the common beam information is a repetition channel or signal, or multiple PUSCHs scheduled by one piece of DCI, for example, PUCCH repetition, PUSCH repetition, multi-slot PUSCH, or multiple PUSCHs scheduled by a single piece of DCI, the repetition of the channel or signal sent in a slot after the first preset duration since the transmission occasion of the first feedback information, or part of the at least two PUSCHs scheduled by the one piece of DCI may use the common beam information. In other words, the foregoing various channels are all transmitted across multiple slots. One of the multiple slots happens to be a taking-effect time of the common beam information. In slots for transmitting the foregoing various channels after that taking-effect time, the foregoing various channels use common beam information newly indicated by the network for transmission. For example, it is assumed that the transmission mode of the target uplink channel is the repetition mode, four repetitions of the target uplink channel correspond to time slot 1, time slot 2, time slot 3 and time slot 4, respectively, and the taking-effect time of the common beam information is time slot 3. The target uplink channel may use the common beam information (that is, the first TCI state) in time slot 3 and time slot 4, and use the original beam information of the target uplink channel (that is, the original TCI state) in time slot 1 and time slot 2.

It should be noted that the first feedback information may specifically refer to acknowledgement (Acknowledgement, ACK) information for receiving the common beam information. In a case that the terminal sends negative acknowledgement (NACK) information for receiving the common beam information, the terminal and the network-side device may determine that the common beam information does not take effect.

In implementation, in a case that the transmission mode of the target uplink channel is the repetition mode, multiple repetitions of the target uplink channel may span multiple time slots. Alternatively, in a case that at least two PUSCHs are scheduled through one piece of DCI, the at least two PUSCHs may be transmitted in different time slots. In this way, there is a possibility that a taking-effect time of the common beam information is located within the multiple time slots spanned by the target uplink channel. In this embodiment, after the common beam information takes effect, the common beam information can be immediately used to transmit part of the repetition of the target uplink channel or part of a PUSCH scheduled by one piece of DCI.

In this embodiment of this application, an R17 unified TCI framework solution for mTRP scenarios is designed for PUCCHs, PUSCHs, SFN, UL RS resources, and UL RS resource sets in repetition, SFN, and regular single-beam transmission in a case that the network-side device indicates one or multiple joint/separate TCI states. With the unified TCI framework solution being used in multi-TRP scenarios, beam information of uplink channels, UL RS resources, or UL RS resource sets in various transmission modes is determined based on the common beam information indicated by the network-side device, thereby ensuring that the network-side device and the terminal have a consistent understanding of the beam in use.

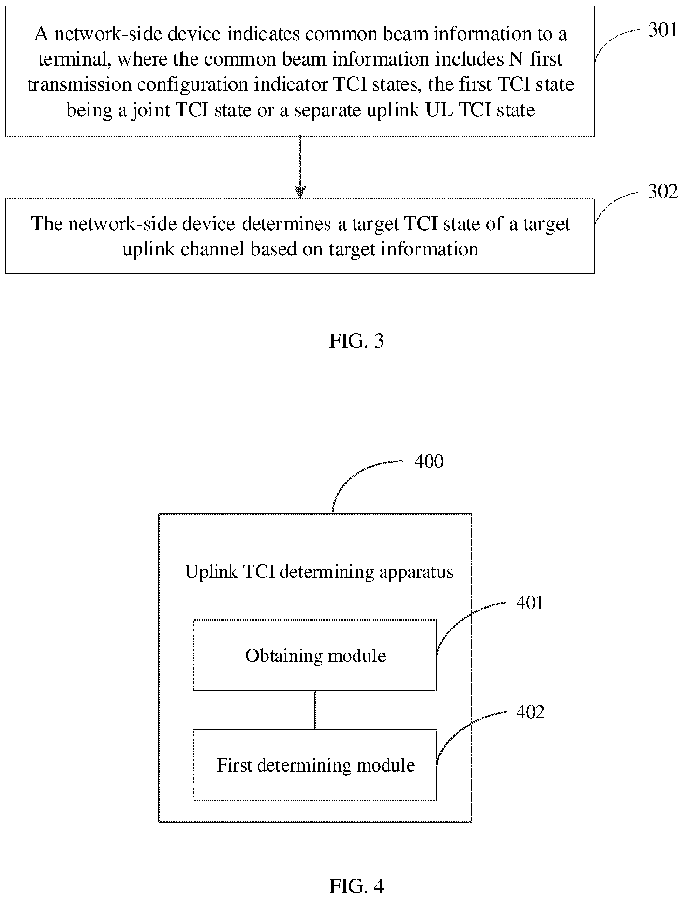

Referring to FIG. 3, an embodiment of this application provides another uplink TCI state determining method. The biggest difference between the method and the method embodiment shown in FIG. 2 is that the method embodiment shown in FIG. 2 is executed by the terminal, while the method embodiment shown in FIG. 3 is executed by the network-side device. The various steps executed by the network-side device are the same as or correspond to the various steps executed by the terminal in the method embodiment shown in FIG. 2. Therefore, for explanations and descriptions of various items in the method embodiment shown in FIG. 3, reference may refer to the corresponding explanations in the method embodiment shown in FIG. 2. Details are not repeated herein again.

As shown in FIG. 3, the uplink TCI state determining method that can be applied to a network-side device can include the following steps.

Step 301. The network-side device indicates common beam information to a terminal, where the common beam information includes N first transmission configuration indicator TCI states, the first TCI state being a joint TCI state or a separate uplink UL TCI state, and N being an integer greater than or equal to 1.

Step 302. The network-side device determines a target TCI state of a target uplink channel based on target information. The target information includes at least one of the following:
the number of first TCI states;
arrangement order or arrangement positions of the first TCI states;
correspondence between the first TCI states and first identifier information;
type of the target uplink channel;
transmission mode of the target uplink channel;
time-domain behavior of the target uplink channel or time-domain behavior of information carried on the target uplink channel;
the number of first identifier information corresponding to the target uplink channel; and
value of the first identifier information corresponding to the target uplink channel; where
the first identifier information includes at least one of the following:
   control resource set CORESET index information;
   CORESET pool index CORESETPoolIndex;
   transmission reception point TRP identifier ID information;
   channel group identifier information;
   CORESET group index information; and
   physical uplink control channel PUCCH resource group identifier information.

Optionally, in a case that the target information includes the number of first TCI states, the determining, by the network-side device, a target TCI state of a target uplink channel based on target information includes:
in a case that the terminal adopts single-beam transmission, if the number of first TCI states is one, determining, by the network-side device, that the transmission mode of the target uplink channel is the single-beam transmission;
in a case that the terminal adopts single-beam transmission, if the number of first TCI states is at least two, determining, by the network-side device, that the transmission mode of the target uplink channel is the single-beam transmission, a repetition mode, or a multi-beam simultaneous transmission mode;
in a case that the terminal adopts a repetition mode or multi-beam simultaneous transmission mode, if the number of first TCI states is one, determining, by the network-side device, that the transmission mode of the target uplink channel is single-beam transmission, the repetition mode, or the multi-beam simultaneous transmission mode; or
in a case that the terminal adopts a repetition mode or a multi-beam simultaneous transmission mode, if the number of first TCI states is at least two, determining, by the network-side device, that the transmission mode of the target uplink channel is the repetition mode or the multi-beam simultaneous transmission mode.

Optionally, in a case that the number of first TCI states is greater than K, K being the number of TCI states required by the target uplink channel, the determining, by the network-side device, a target TCI state of a target uplink channel based on the first TCI state includes:
determining, by the network-side device, that K first TCI states arranged at preset positions are target TCI states of the target uplink channel; or
determining, by the network-side device, K first TCI states from all the first TCI states as the target TCI states, and sending first indication information to the terminal, where the first indication information is used to indicate the K first TCI states.

Optionally, the first indication information is carried in a first signaling field, the first signaling field being a signaling field in medium access control MAC control element CE signaling or DCI signaling.

Optionally, in a case that the target uplink channel has M TCI states, if the number of first TCI states is at least M, the target TCI state is at least M first TCI states, M being an integer greater than or equal to 2;
in a case that the target uplink channel has M TCI states, if N is less than M, the target TCI state is M original TCI states of the target uplink channel, the target TCI state is (M-N) original TCI states and the N first TCI states of the target uplink channel, or the target TCI states are the N first TCI states; or
in a case that the target uplink channel has one TCI state, if the number of first TCI states is at least one, the target TCI state is at least one first TCI state.

Optionally, the target information further includes the transmission mode of the target uplink channel, and the transmission mode includes: a preset transmission mode, a repetition mode, a multi-beam simultaneous transmission mode, or a transmission mode dynamically switching among the preset transmission mode, the repetition mode, and the multi-beam simultaneous transmission mode, where the preset transmission mode is single-beam transmission without repetition;
the determining, by the network-side device, a target TCI state of a target uplink channel based on target information includes:
determining, by the network-side device, the target TCI state of the target uplink channel from the first TCI states based on the transmission mode of the target uplink channel; and
the method further includes:
   sending, by the network-side device, second indication information to the terminal, where the second indication information is used to indicate the transmission mode of the target uplink channel.

Optionally, the type of the target uplink channel includes at least one of the following: physical uplink control channel PUCCH, physical uplink shared channel PUSCH, and UL reference signal RS resource.

Optionally, the PUCCH includes at least one of the following:
any PUCCH;
PUCCH scheduled by or associated with a preset physical downlink control channel PDCCH; and
terminal-specific PUCCH; and/or
the PUSCH includes at least one of the following:
   any PUSCH;
   PUSCH scheduled by or associated with a preset PDCCH;
   dynamically scheduled PUSCH;
   terminal-specific PUSCH; and
   configured grant PUSCH.

Optionally, the preset PDCCH includes at least one of the following:
all PDCCHs, a PDCCH in a control resource set CORESET specific to the terminal, a PDCCH in a CORESET associated with only a UE-specific search space USS, a PDCCH in a CORESET associated with a USS and a common search space CSS, a PDCCH in a CORESET associated with only a CSS, and a PDCCH in a CORESET other than CORESET#0.

Optionally, in a case that the number of first TCI states is greater than 1:
the target TCI state includes at least one of the following:
all first TCI states;
at least two first TCI states indicated by the network-side device of all the first TCI states, configured for the target uplink channel in a repetition mode or multi-beam simultaneous transmission mode;
one first TCI state indicated by the network-side device of all the first TCI states;
a first TCI state the same as a TCI state of a first PDCCH, where the first PDCCH is used to schedule or trigger transmission of the target uplink channel, the first PDCCH is used to schedule a target PDSCH and feedback information for the target PDSCH is carried on the target uplink channel, or the first PDCCH is associated with the target uplink channel;
the target TCI state includes a first TCI state corresponding to the first identifier information associated with the target uplink channel;
the target TCI state includes first TCI states of repetitions of the target uplink channel, where the first TCI states of the repetitions of the target uplink channel correspond to different first identifier information;
at least two first TCI states corresponding to at least two pieces of first identifier information, where the target uplink channel is associated with the at least two pieces of first identifier information;
at least one first TCI state corresponding to one piece of first identifier information, where the target uplink channel is associated with the one piece of first identifier information; and
at least two first TCI states determined based on preset correspondence.

Optionally, the preset correspondence includes:
the arrangement order or arrangement positions of the first TCI states correspond to TCI states of repetitions of the target uplink channel; or
the arrangement order or arrangement positions of the first TCI states correspond to each TCI state of the target uplink channel.

Optionally, in a case that the number of first TCI states is greater than 1, if the transmission mode of the target uplink channel is a preset transmission mode, the target TCI state includes a first preset TCI state, where the first preset TCI state includes at least one of the following:
a first TCI state arranged at a preset position in all first TCI states;
a first TCI state corresponding to preset first identifier information; and
a first TCI state indicated by the network-side device of all first TCI states.

Optionally, in a case that the number of first TCI states is greater than 1 and the time-domain behavior of the target uplink channel is a periodic uplink channel or the time-domain behavior of the information carried on the target uplink channel is periodic information, the target TCI state includes at least one of the following:
a TCI state other than the first TCI states in a TCI state pool, or an original TCI state of the target uplink channel;
a first TCI state corresponding to the first identifier information associated with the target uplink channel;
preset first TCI state;
a first TCI state indicated by third indication information from the network-side device; or
a second preset TCI state; where
the second preset TCI state includes at least one of the following:
   a first TCI state arranged at a preset position in all first TCI states; and
   a first TCI state corresponding to preset first identifier information.

Optionally, in a case that the number of first TCI states is greater than 1, if the type of the target uplink channel is PUSCH or UL RS resource or UL RS resource set, the target TCI state includes at least one of the following:
a first TCI state corresponding to a first codepoint or at least one of the first TCI state corresponding to the first codepoint, where the first codepoint is a codepoint indicated by a TCI field in DCI indicating the first TCI state;
a first TCI state corresponding to preset first identifier information;
a first TCI state the same as a TCI state of a PDCCH in which DCI scheduling the target uplink channel is;
a first TCI state corresponding to the first identifier information associated with a PDCCH in which a DCI scheduling the target uplink channel is; and
a first TCI state corresponding to the first identifier information associated with the target uplink channel.

Optionally, in a case that a transmission mode of a PDCCH in which DCI indicating the first TCI state is or PDCCH scheduling the target uplink channel is a repetition mode or multi-beam simultaneous transmission mode, the target TCI state includes:
a first TCI state the same as a TCI state of the PDCCH in repetition or multi-beam simultaneous transmission, or at least one first TCI state in a first TCI state used by the PDCCH in repetition or multi-beam simultaneous transmission.

Optionally, in a case that the number of first TCI states is greater than 1, if the type of the target uplink channel is PUSCH in uplink configured grant type 1, the target TCI state includes at least one of the following:
a first TCI state corresponding to preset CORESETPoolIndex, where the preset CORESETPoolIndex includes CORESETPoolIndex corresponding to signaling carrying PUSCH configuration information, or the preset CORESETPoolIndex is CORESETPoolIndex with a preset value;
a first TCI state arranged at a preset position in all the first TCI states;
a first TCI state corresponding to a TCI state identifier or CORESETPoolIndex indicated by configuration information of the PUSCH in uplink configured grant type 1;
a first TCI state of a preset SRS resource, where the preset SRS resource is an SRS resource indicated by a sounding reference signal SRS resource indicator SRI in configuration information of the PUSCH in uplink configured grant type 1; and
at least one first TCI state determined based on a power control parameter in configuration information of the PUSCH in uplink configured grant type 1.

Optionally, in a case that the number of first TCI states is greater than 1, if the type of the target uplink channel is UL RS resource or resource set, the target TCI state includes:
a first TCI state of the first identifier information associated with the UL RS resource or resource set;
a first TCI state the same as a TCI state of a PDCCH triggering the UL RS resource or resource set; and
a first TCI state corresponding to the UL RS resource or resource set, where each UL RS resource or resource set has its respective corresponding TCI state.

Optionally, in a case that the number of first TCI states is equal to 1, if the transmission mode of the target uplink channel is a repetition mode or multi-beam simultaneous transmission mode, the determining, by the network-side device, a target TCI state of a target uplink channel based on target information includes at least one of the following:
determining, by the network-side device, that a configuration of the repetition mode or multi-beam simultaneous transmission mode of the target uplink channel is ineffective;
determining, by the network-side device, that the target uplink channel is transmitted based on the first TCI state;
determining, by the network-side device, that the target TCI state includes at least two original TCI states of the target uplink channel; and
determining, by the network-side device, to update a third preset TCI state in at least two original TCI states of the target uplink channel to the first TCI state; where the third preset TCI state corresponds to the same first identifier information as the first TCI state, the third preset TCI state is one located at a preset position in the at least two original TCI states of the target uplink channel, or the third preset TCI state is associated with the first TCI state.

Optionally, in a case that the number of first TCI states is equal to 1, the determining, by the network-side device, a target TCI state of a target uplink channel based on target information includes at least one of the following:
in a case that the target uplink channel corresponds to the same first identifier information as the first TCI state, determining, by the network-side device, that the target TCI state includes the first TCI state;
in a case that the target uplink channel and the first TCI state correspond to different first identifier information, determining, by the network-side device, that the target TCI state includes an original TCI state of the target uplink channel or that the PUSCH or a UL RS stops transmission;
determining, by the network-side device, that the target TCI state includes a TCI state of a PDCCH scheduling or triggering the target uplink channel; or
in a case that the number of first TCI states is equal to 1, if the target uplink channel originally has at least two TCI states, the determining, by the network-side device, a target TCI state of a target uplink channel based on target information includes:
   determining, by the network-side device, that the target TCI state is the first TCI state;
   determining, by the network-side device, that the target TCI state includes at least two original TCI states of the target uplink channel; and
   determining, by the network-side device, to update a fourth preset TCI state in at least two original TCI states of the target uplink channel to the first TCI state; where the fourth preset TCI state corresponds to the same first identifier information as the first TCI state, the fourth preset TCI state is one arranged at a preset position in the at least two original TCI states of the target uplink channel, or the fourth preset TCI state is associated with the first TCI state.

Optionally, in a case that the type of the target uplink channel is UL RS resource or resource set, the determining, by the network-side device, that the target TCI state is the first TCI state includes:
determining, by the network-side device, that target TCI states of all RS resources in UL RS resources or resource set associated with the first TCI state include the first TCI state; or
determining, by the network-side device, that target TCI states of all RS resources in UL RS resources or resource set corresponding to the same first identifier information as the first TCI state include the first TCI state.

Optionally, in a case that the transmission mode of the target uplink channel is a repetition mode, or the type of the target uplink channel is PUSCH or UL RS resource and target DCI scheduling the target uplink channel simultaneously schedules at least two PUSCHs or at least two UL RS resources;
after the network-side device obtains from the terminal the common beam information indicated by the network-side device, the method further includes:
receiving, by the network-side device, first feedback information from the terminal at a second occasion, where the first feedback information is used to indicate that the terminal has correctly received the common beam information;
configuring, by the network-side device based on the first feedback information, the common beam information to take effect; and
determining, by the network-side device, that repetition of the target uplink channel in a slot after a second occasion or a PUSCH or UL RS resource scheduled by the target DCI in a slot after the second occasion uses the common beam information for transmission, where the second occasion is an occasion when the common beam information takes effect.

In this embodiment of this application, a unified TCI framework solution that can be used to mTRP scenarios is proposed so that the R17 unified TCI framework can be used to mTRP scenarios. In addition, a beam determining solution is proposed to use the framework to a PDCCH and other uplink channels and UL RS resources or UL RS resource sets with repetition, SFN, regular single-beam transmission in a case that the network-side device indicates one or multiple joint/separate TCI states, so as to determine beam information of the uplink channels or UL RS resources or UL RS resource sets in various transmission modes based on the unified TCI state (that is, the first TCI state) indicated by the network-side device, thereby ensuring that the network-side device and the terminal have a consistent understanding of the beam in use.

The uplink TCI state determining method provided in this embodiment of this application can be executed by the foregoing uplink TCI state determining apparatus. The uplink TCI state determining apparatus provided in the embodiments of this application is described through an example in which the uplink TCI state determining apparatus executes the uplink TCI state determining method in the embodiments of this application.

In an embodiment, if the uplink TCI state determining apparatus is applied to a terminal, as shown in FIG. 4, the uplink TCI state determining apparatus 400 may include the following modules:
a first obtaining module 401 adapted to obtain common beam information indicated by a network-side device, where the common beam information includes N first transmission configuration indicator TCI states, the first TCI state being a joint TCI state or a separate uplink UL TCI state, and N being an integer greater than or equal to 1; and
a first determining module 402 adapted to determine a target TCI state of a target uplink channel based on target information, where the target information includes at least one of the following:
   the number of first TCI states;
   arrangement order or arrangement positions of the first TCI states;
   correspondence between the first TCI states and first identifier information;
   type of the target uplink channel;
   transmission mode of the target uplink channel;
   time-domain behavior of the target uplink channel or time-domain behavior of information carried on the target uplink channel;
   the number of first identifier information corresponding to the target uplink channel; and
   value of the first identifier information corresponding to the target uplink channel; where
   the first identifier information includes at least one of the following:
      control resource set CORESET index information;
      CORESET pool index CORESETPoolIndex;
      transmission reception point TRP identifier ID information;
      channel group identifier information;
      CORESET group index information; and
      physical uplink control channel PUCCH resource group identifier information.

Optionally, in a case that the target information includes the number of first TCI states, the first determining module 402 is specifically adapted to:
in a case that the terminal adopts single-beam transmission, if the number of first TCI states is one, determine that the transmission mode of the target uplink channel is the single-beam transmission;
in a case that the terminal adopts single-beam transmission, if the number of first TCI states is at least two, determine that the transmission mode of the target uplink channel is the single-beam transmission, a repetition mode, or a multi-beam simultaneous transmission mode;
in a case that the terminal adopts a repetition mode or multi-beam simultaneous transmission mode, if the number of first TCI states is one, determine that the transmission mode of the target uplink channel is single-beam transmission, the repetition mode, or the multi-beam simultaneous transmission mode; or
in a case that the terminal adopts a repetition mode or a multi-beam simultaneous transmission mode, if the number of first TCI states is at least two, determine that the transmission mode of the target uplink channel is the repetition mode or the multi-beam simultaneous transmission mode.

Optionally, in a case that the number of first TCI states is greater than K, K being the number of TCI states required by the target uplink channel, the first determining module 402 is specifically adapted to:
determine that K first TCI states arranged at preset positions are target TCI states of the target uplink channel; or
determine the target TCI state of the target uplink channel based on indication of first indication information from the network-side device, where the first indication information is used to indicate K first TCI states.

Optionally, the first indication information is carried in a first signaling field, the first signaling field being a signaling field in medium access control MAC control element CE signaling or DCI signaling.

Optionally, the first signaling field is effective or present in a case that a preset condition is met, the preset condition including at least one of the following:
the network-side device has configured the first signaling field;
the network-side device has indicated at least two first TCI states through DCI signaling; and
in a TCI codepoint activated by the network-side device through a medium access control MAC control element CE, at least one codepoint corresponds to at least two TCI states.

Optionally, in a case that the target uplink channel has M TCI states, if the number of first TCI states is at least M, the target TCI state is at least M first TCI states, M being an integer greater than or equal to 2;
in a case that the target uplink channel has M TCI states, if N is less than M, the target TCI state is M original TCI states of the target uplink channel, the target TCI state is (M-N) original TCI states and the N first TCI states of the target uplink channel, or the target TCI states are the N first TCI states; or
in a case that the target uplink channel has one TCI state, if the number of first TCI states is at least one, the target TCI state is at least one first TCI state.

Optionally, the uplink TCI state determining apparatus 400 further includes:
a first receiving module adapted to receive second indication information from the network-side device, and determine the transmission mode of the target uplink channel based on the second indication information, where the transmission mode includes: a preset transmission mode, a repetition mode, a multi-beam simultaneous transmission mode, or a transmission mode dynamically switching among the preset transmission mode, the repetition mode, and the multi-beam simultaneous transmission mode, where the preset transmission mode is single-beam transmission without repetition.

Optionally, the second indication information is used to indicate the transmission mode, or the second indication information is used to indicate the number of target TCI states.

Optionally, the type of the target uplink channel includes at least one of the following: physical uplink control channel PUCCH, physical uplink shared channel PUSCH, and UL reference signal RS resource.

Optionally, the PUCCH includes at least one of the following:
any PUCCH;
PUCCH scheduled by or associated with a preset physical downlink control channel PDCCH; and
terminal-specific PUCCH; and/or
the PUSCH includes at least one of the following:
   any PUSCH;
   PUSCH scheduled by or associated with a preset PDCCH;
   dynamically scheduled PUSCH;
   terminal-specific PUSCH; and
   configured grant PUSCH.

Optionally, the preset PDCCH includes at least one of the following:
all PDCCHs, a PDCCH in a control resource set CORESET specific to the terminal, a PDCCH in a CORESET associated with only a UE-specific search space USS, a PDCCH in a CORESET associated with a USS and a common search space CSS, a PDCCH in a CORESET associated with only a CSS, and a PDCCH in a CORESET other than CORESET#0.

Optionally, in a case that the number of first TCI states is greater than 1:
the target TCI state includes at least one of the following:
all first TCI states;
at least two first TCI states indicated by the network-side device of all the first TCI states, configured for the target uplink channel in a repetition mode or multi-beam simultaneous transmission mode;
one first TCI state indicated by the network-side device of all the first TCI states;
a first TCI state the same as a TCI state of a first PDCCH, where the first PDCCH is used to schedule or trigger the target uplink channel, the first PDCCH is used to schedule a target PDSCH and feedback information for the target PDSCH is carried on the target uplink channel, or the first PDCCH is associated with the target uplink channel;
a first TCI state corresponding to the first identifier information associated with the target uplink channel;
first TCI states of repetitions of the target uplink channel, where the first TCI states of the repetitions of the target uplink channel correspond to different first identifier information;
at least two first TCI states corresponding to at least two pieces of first identifier information, where the target uplink channel is associated with the at least two pieces of first identifier information;
at least one first TCI state corresponding to one piece of first identifier information, where the target uplink channel is associated with the one piece of first identifier information; and
at least two first TCI states determined based on preset correspondence.

Optionally, the preset correspondence includes:
the arrangement order or arrangement positions of the first TCI states correspond to TCI states of repetitions of the target uplink channel; or
the arrangement order or arrangement positions of the first TCI states correspond to each TCI state of the target uplink channel.

Optionally, in a case that the number of first TCI states is greater than 1, if the transmission mode of the target uplink channel is a preset transmission mode, the target TCI state includes a first preset TCI state, where the first preset TCI state includes at least one of the following:
a first TCI state arranged at a preset position in all first TCI states;
a first TCI state corresponding to preset first identifier information; and
a first TCI state indicated by the network-side device of all first TCI states.

Optionally, in a case that the time-domain behavior of the target uplink channel is a periodic uplink channel or the time-domain behavior of the information carried on the target uplink channel is periodic information, the target TCI state includes at least one of the following:
a TCI state other than the first TCI states in a TCI state pool, or an original TCI state of the target uplink channel;
a first TCI state corresponding to the first identifier information associated with the target uplink channel;
a first TCI state indicated by third indication information from the network-side device; and
a second preset TCI state; where
the second preset TCI state includes at least one of the following:
   a first TCI state arranged at a preset position in all first TCI states; and
   a first TCI state corresponding to preset first identifier information.

Optionally, the third indication information is in configuration information of the target uplink channel.

Optionally, in a case that the number of first TCI states is greater than 1, if the type of the target uplink channel is PUSCH or UL RS resource or UL RS resource set, the target TCI state includes at least one of the following:
a first TCI state corresponding to a first codepoint or at least one of the first TCI state corresponding to the first codepoint, where the first codepoint is a codepoint indicated by a TCI field in DCI indicating the first TCI state;
a first TCI state corresponding to preset first identifier information;
a first TCI state the same as a TCI state of a PDCCH in which DCI scheduling the target uplink channel is;
a first TCI state corresponding to the first identifier information associated with a PDCCH in which a DCI scheduling the target uplink channel is; and
a first TCI state corresponding to the first identifier information associated with the target uplink channel.

Optionally, in a case that a transmission mode of a PDCCH in which DCI indicating the first TCI state is or PDCCH scheduling the target uplink channel is a repetition mode or multi-beam simultaneous transmission mode, the target TCI state includes:
a first TCI state the same as a TCI state of the PDCCH in repetition or multi-beam simultaneous transmission, or at least one first TCI state in a first TCI state used by the PDCCH in repetition or multi-beam simultaneous transmission.

Optionally, in a case that the number of first TCI states is greater than 1, if the type of the target uplink channel is PUSCH in uplink configured grant type 1, the target TCI state includes at least one of the following:
a first TCI state corresponding to preset CORESETPoolIndex, where the preset CORESETPoolIndex includes CORESETPoolIndex corresponding to signaling carrying PUSCH configuration information, or the preset CORESETPoolIndex is CORESETPoolIndex with a preset value;
a first TCI state arranged at a preset position in all the first TCI states;
a first TCI state corresponding to a TCI state identifier or CORESETPoolIndex indicated by configuration information of the PUSCH in uplink configured grant type 1;
a first TCI state of a preset SRS resource, where the preset SRS resource is an SRS resource indicated by a sounding reference signal SRS resource indicator SRI in configuration information of the PUSCH in uplink configured grant type 1; and
at least one first TCI state determined based on a power control parameter in configuration information of the PUSCH in uplink configured grant type 1.

Optionally, in a case that the number of first TCI states is greater than 1, if the type of the target uplink channel is UL RS resource or resource set, the target TCI state includes:
a first TCI state of the first identifier information associated with the UL RS resource or resource set;
a first TCI state the same as a TCI state of a PDCCH triggering the UL RS resource or resource set; and
a first TCI state corresponding to the UL RS resource or resource set, where each UL RS resource or resource set has its respective corresponding TCI state.

Optionally, in a case that the number of first TCI states is equal to 1, if the transmission mode of the target uplink channel is a repetition mode or multi-beam simultaneous transmission mode, the first determining module 402 is specifically adapted to perform at least one of the following:
determining that a configuration of the repetition mode or multi-beam simultaneous transmission mode of the target uplink channel is ineffective;
determining that the target uplink channel is transmitted based on the first TCI state;
determining that the target TCI state includes at least two original TCI states of the target uplink channel; and
determining to update a third preset TCI state in at least two original TCI states of the target uplink channel to the first TCI state; where the third preset TCI state corresponds to the same first identifier information as the first TCI state, the preset TCI state is one located at a preset position in the at least two original TCI states of the target uplink channel, or the third preset TCI state is associated with the first TCI state.

Optionally, in a case that the number of first TCI states is equal to 1, the first determining module 402 is specifically adapted to perform at least one of the following:
in a case that the target uplink channel corresponds to the same first identifier information as the first TCI state, determining that the target TCI state includes the first TCI state;
in a case that the target uplink channel and the first TCI state correspond to different first identifier information, determining that the target TCI state includes an original TCI state of the target uplink channel or that the target uplink channel stops transmission; and
determining that the target TCI state includes a TCI state of a PDCCH scheduling or triggering the target uplink channel; or
in a case that the number of first TCI states is equal to 1, if the target uplink channel originally has at least two TCI states, the first determining module 402 is specifically adapted to:
   determine that the target TCI state is the first TCI state;
   determine that the target TCI state includes at least two original TCI states of the target uplink channel; or
   determine to update a fourth preset TCI state in at least two original TCI states of the target uplink channel to the first TCI state; where the fourth preset TCI state corresponds to the same first identifier information as the first TCI state, the fourth preset TCI state is one arranged at a preset position in the at least two original TCI states of the target uplink channel, or the fourth preset TCI state is associated with the first TCI state.

Optionally, in a case that the type of the target uplink channel is UL RS resource or resource set, the first determining module 402 is specifically adapted to:
determine that target TCI states of all RS resources in UL RS resources or resource set associated with the first TCI state include the first TCI state; or
determine that target TCI states of all RS resources in UL RS resources or resource set corresponding to the same first identifier information as the first TCI state include the first TCI state.

Optionally, in a case that the transmission mode of the target uplink channel is a repetition mode, or the type of the target uplink channel is PUSCH or UL RS resource and target DCI scheduling the target uplink channel simultaneously schedules at least two PUSCHs or at least two UL RS resources;
the uplink TCI state determining apparatus 400 further includes:
a second sending module adapted to send first feedback information to the network-side device at a first occasion, the first feedback information being used to indicate that the terminal has correctly received the common beam information; and
a third determining module adapted to determine that repetition of the target uplink channel in a slot after a second occasion or a PUSCH or UL RS resource scheduled by the target DCI in a slot after the second occasion uses the common beam information for transmission, where a time difference between the second occasion and the first occasion is a first preset duration, and the second occasion is later than the first occasion.

The uplink TCI state determining apparatus 400 in the embodiments of this application can be an electronic device such as an electronic device with an operating system, or a component in an electronic device such as an integrated circuit or chip. The electronic device may be a terminal or other devices than terminals. For example, the terminal may include but is not limited to the types of the terminal 11 listed above, and the other devices may be servers, network attached storage (Network Attached Storage, NAS), or the like, which are not specifically limited in the embodiments of this application.

The uplink TCI state determining apparatus 400 provided in this embodiment of this application can implement the steps executed by the terminal in the method embodiment shown in FIG. 2, with the same technical effects achieved. To avoid repetition, details are not described herein again.

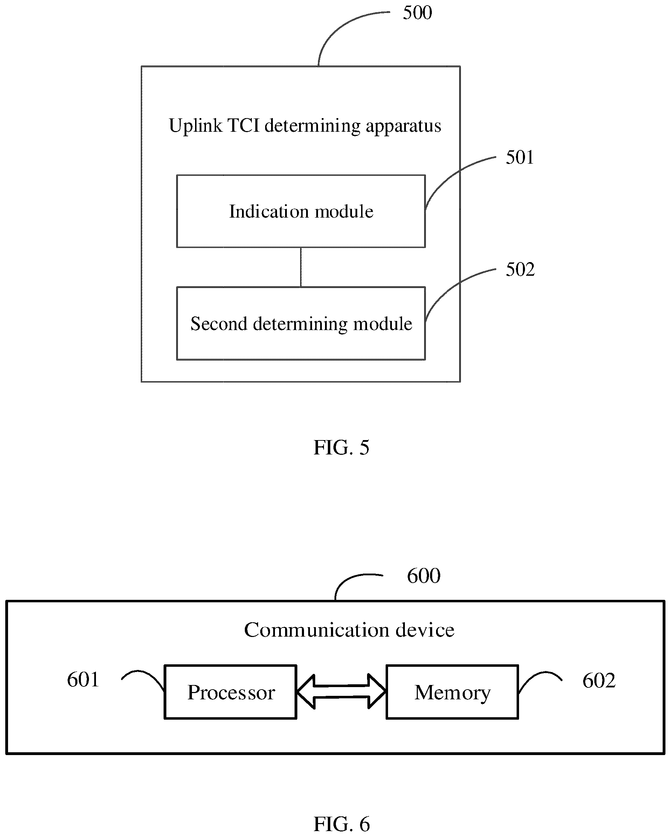

In another embodiment, if the uplink TCI state determining apparatus is applied to a network-side device, as shown in FIG. 5, the uplink TCI state determining apparatus 500 may include the following modules:
an indicating module 501 adapted to indicate common beam information to a terminal, where the common beam information includes N first transmission configuration indicator TCI states, the first TCI state being a joint TCI state or a separate uplink UL TCI state, and N being an integer greater than or equal to 1; and
a second determining module 502 adapted to determine a target TCI state of a target uplink channel based on target information, where the target information includes at least one of the following:
   the number of first TCI states;
   arrangement order or arrangement positions of the first TCI states;
   correspondence between the first TCI states and first identifier information;
   type of the target uplink channel;
   transmission mode of the target uplink channel;
   time-domain behavior of the target uplink channel or time-domain behavior of information carried on the target uplink channel;
   the number of first identifier information corresponding to the target uplink channel; and
   value of the first identifier information corresponding to the target uplink channel; where
   the first identifier information includes at least one of the following:
      control resource set CORESET index information;
   CORESET pool index CORESETPoolIndex;
   transmission reception point TRP identifier ID information;
   channel group identifier information;
   CORESET group index information; and
   physical uplink control channel PUCCH resource group identifier information.

Optionally, in a case that the target information includes the number of first TCI states, the second determining module 502 is specifically adapted to:
in a case that the terminal adopts single-beam transmission, if the number of first TCI states is one, determine that the transmission mode of the target uplink channel is the single-beam transmission;
in a case that the terminal adopts single-beam transmission, if the number of first TCI states is at least two, determine that the transmission mode of the target uplink channel is the single-beam transmission, a repetition mode, or a multi-beam simultaneous transmission mode;
in a case that the terminal adopts a repetition mode or multi-beam simultaneous transmission mode, if the number of first TCI states is one, determine that the transmission mode of the target uplink channel is single-beam transmission, the repetition mode, or the multi-beam simultaneous transmission mode; or
in a case that the terminal adopts a repetition mode or a multi-beam simultaneous transmission mode, if the number of first TCI states is at least two, determine that the transmission mode of the target uplink channel is the repetition mode or the multi-beam simultaneous transmission mode.

Optionally, in a case that the number of first TCI states is greater than K, K being the number of TCI states required by the target uplink channel, the second determining module 502 includes:
a first determining unit adapted to determine that K first TCI states arranged at preset positions are target TCI states of the target uplink channel; or
a second determining unit and sending unit, where the second determining unit is adapted to determine K first TCI states from all the first TCI states as the target TCI states, and sending first indication information to the terminal, where the first indication information is used to indicate the K first TCI states.

Optionally, the first indication information is carried in a first signaling field, the first signaling field being a signaling field in medium access control MAC control element CE signaling or DCI signaling.

Optionally, in a case that the target uplink channel has M TCI states, if the number of first TCI states is at least M, the target TCI state is at least M first TCI states, M being an integer greater than or equal to 2;
in a case that the target uplink channel has M TCI states, if N is less than M, the target TCI state is M original TCI states of the target uplink channel, the target TCI state is (M-N) original TCI states and the N first TCI states of the target uplink channel, or the target TCI states are the N first TCI states; or
in a case that the target uplink channel has one TCI state, if the number of first TCI states is at least one, the target TCI state is at least one first TCI state.

Optionally, the target information further includes the transmission mode of the target uplink channel, and the transmission mode includes: a preset transmission mode, a repetition mode, a multi-beam simultaneous transmission mode, or a transmission mode dynamically switching among the preset transmission mode, the repetition mode, and the multi-beam simultaneous transmission mode, where the preset transmission mode is single-beam transmission without repetition;
the second determining module 502 is specifically adapted to:
determine the target TCI state of the target uplink channel from the first TCI states based on the transmission mode of the target uplink channel; and
the uplink TCI state determining apparatus 500 further includes:
   a first sending module adapted to send second indication information to the terminal, where the second indication information is used to indicate the transmission mode of the target uplink channel.

Optionally, the type of the target uplink channel includes at least one of the following: physical uplink control channel PUCCH, physical uplink shared channel PUSCH, and UL reference signal RS resource.

Optionally, the PUCCH includes at least one of the following:
any PUCCH;
PUCCH scheduled by or associated with a preset physical downlink control channel PDCCH; and
terminal-specific PUCCH; and/or
the PUSCH includes at least one of the following:
   any PUSCH;
   PUSCH scheduled by or associated with a preset PDCCH;
   dynamically scheduled PUSCH;
   terminal-specific PUSCH; and
   configured grant PUSCH.

Optionally, the preset PDCCH includes at least one of the following:
all PDCCHs, a PDCCH in a control resource set CORESET specific to the terminal, a PDCCH in a CORESET associated with only a UE-specific search space USS, a PDCCH in a CORESET associated with a USS and a common search space CSS, a PDCCH in a CORESET associated with only a CSS, and a PDCCH in a CORESET other than CORESET#0.

Optionally, in a case that the number of first TCI states is greater than 1:
the target TCI state includes at least one of the following:
all first TCI states;
at least two first TCI states indicated by the network-side device of all the first TCI states, configured for the target uplink channel in a repetition mode or multi-beam simultaneous transmission mode;
one first TCI state indicated by the network-side device of all the first TCI states;
a first TCI state the same as a TCI state of a first PDCCH, where the first PDCCH is used to schedule or trigger transmission of the target uplink channel, the first PDCCH is used to schedule a target PDSCH and feedback information for the target PDSCH is carried on the target uplink channel, or the first PDCCH is associated with the target uplink channel;
the target TCI state includes a first TCI state corresponding to the first identifier information associated with the target uplink channel;
the target TCI state includes first TCI states of repetitions of the target uplink channel, where the first TCI states of the repetitions of the target uplink channel correspond to different first identifier information;
at least two first TCI states corresponding to at least two pieces of first identifier information, where the target uplink channel is associated with the at least two pieces of first identifier information;
at least one first TCI state corresponding to one piece of first identifier information, where the target uplink channel is associated with the one piece of first identifier information; and
at least two first TCI states determined based on preset correspondence.

Optionally, the preset correspondence includes:
the arrangement order or arrangement positions of the first TCI states correspond to TCI states of repetitions of the target uplink channel; or
the arrangement order or arrangement positions of the first TCI states correspond to each TCI state of the target uplink channel.

Optionally, in a case that the number of first TCI states is greater than 1, if the transmission mode of the target uplink channel is a preset transmission mode, the target TCI state includes a first preset TCI state, where the first preset TCI state includes at least one of the following:
a first TCI state arranged at a preset position in all first TCI states;
a first TCI state corresponding to preset first identifier information; and
a first TCI state indicated by the network-side device of all first TCI states.

Optionally, in a case that the number of first TCI states is greater than 1 and the time-domain behavior of the target uplink channel is a periodic uplink channel or the time-domain behavior of the information carried on the target uplink channel is periodic information, the target TCI state includes at least one of the following:
a TCI state other than the first TCI states in a TCI state pool, or an original TCI state of the target uplink channel;
a first TCI state corresponding to the first identifier information associated with the target uplink channel;
preset first TCI state;
a first TCI state indicated by third indication information from the network-side device; or
a second preset TCI state; where
the second preset TCI state includes at least one of the following:
   a first TCI state arranged at a preset position in all first TCI states; and
   a first TCI state corresponding to preset first identifier information.

Optionally, in a case that the number of first TCI states is greater than 1, if the type of the target uplink channel is PUSCH or UL RS resource or UL RS resource set, the target TCI state includes at least one of the following:
a first TCI state corresponding to a first codepoint or at least one of the first TCI state corresponding to the first codepoint, where the first codepoint is a codepoint indicated by a TCI field in DCI indicating the first TCI state;
a first TCI state corresponding to preset first identifier information;
a first TCI state the same as a TCI state of a PDCCH in which DCI scheduling the target uplink channel is;
a first TCI state corresponding to the first identifier information associated with a PDCCH in which a DCI scheduling the target uplink channel is; and
a first TCI state corresponding to the first identifier information associated with the target uplink channel.

Optionally, in a case that a transmission mode of a PDCCH in which DCI indicating the first TCI state is or PDCCH scheduling the target uplink channel is a repetition mode or multi-beam simultaneous transmission mode, the target TCI state includes:
a first TCI state the same as a TCI state of the PDCCH in repetition or multi-beam simultaneous transmission, or at least one first TCI state in a first TCI state used by the PDCCH in repetition or multi-beam simultaneous transmission.

Optionally, in a case that the number of first TCI states is greater than 1, if the type of the target uplink channel is PUSCH in uplink configured grant type 1, the target TCI state includes at least one of the following:
a first TCI state corresponding to preset CORESETPoolIndex, where the preset CORESETPoolIndex includes CORESETPoolIndex corresponding to signaling carrying PUSCH configuration information, or the preset CORESETPoolIndex is CORESETPoolIndex with a preset value;
a first TCI state arranged at a preset position in all the first TCI states;
a first TCI state corresponding to a TCI state identifier or CORESETPoolIndex indicated by configuration information of the PUSCH in uplink configured grant type 1;
a first TCI state of a preset SRS resource, where the preset SRS resource is an SRS resource indicated by a sounding reference signal SRS resource indicator SRI in configuration information of the PUSCH in uplink configured grant type 1; and
at least one first TCI state determined based on a power control parameter in configuration information of the PUSCH in uplink configured grant type 1.

Optionally, in a case that the number of first TCI states is greater than 1, if the type of the target uplink channel is UL RS resource or resource set, the target TCI state includes:
a first TCI state of the first identifier information associated with the UL RS resource or resource set;
a first TCI state the same as a TCI state of a PDCCH triggering the UL RS resource or resource set; and
a first TCI state corresponding to the UL RS resource or resource set, where each UL RS resource or resource set has its respective corresponding TCI state.

Optionally, in a case that the number of first TCI states is equal to 1, if the transmission mode of the target uplink channel is a repetition mode or multi-beam simultaneous transmission mode, the second determining module 502 is specifically adapted to perform at least one of the following:
determining that a configuration of the repetition mode or multi-beam simultaneous transmission mode of the target uplink channel is ineffective;
determining that the target uplink channel is transmitted based on the first TCI state;
determining that the target TCI state includes at least two original TCI states of the target uplink channel; and
determining to update a third preset TCI state in at least two original TCI states of the target uplink channel to the first TCI state; where the third preset TCI state corresponds to the same first identifier information as the first TCI state, the third preset TCI state is one located at a preset position in the at least two original TCI states of the target uplink channel, or the third preset TCI state is associated with the first TCI state.

Optionally, in a case that the number of first TCI states is equal to 1, the second determining module 502 is specifically adapted to perform at least one of the following:
in a case that the target uplink channel corresponds to the same first identifier information as the first TCI state, determining that the target TCI state includes the first TCI state;
in a case that the target uplink channel and the first TCI state correspond to different first identifier information, determining that the target TCI state includes an original TCI state of the target uplink channel or that the PUSCH or a UL RS stops transmission;
determining that the target TCI state includes a TCI state of a PDCCH scheduling or triggering the target uplink channel; or
in a case that the number of first TCI states is equal to 1, if the target uplink channel originally has at least two TCI states, the second determining module 502 is specifically adapted to:
   determine that the target TCI state is the first TCI state;
   determine that the target TCI state includes at least two original TCI states of the target uplink channel; or
   determine to update a fourth preset TCI state in at least two original TCI states of the target uplink channel to the first TCI state; where the fourth preset TCI state corresponds to the same first identifier information as the first TCI state, the fourth preset TCI state is one arranged at a preset position in the at least two original TCI states of the target uplink channel, or the fourth preset TCI state is associated with the first TCI state.

Optionally, in a case that the type of the target uplink channel is UL RS resource or resource set, the determining, by the network-side device, that the target TCI state is the first TCI state includes:
determining, by the network-side device, that target TCI states of all RS resources in UL RS resources or resource set associated with the first TCI state include the first TCI state; or
determining, by the network-side device, that target TCI states of all RS resources in UL RS resources or resource set corresponding to the same first identifier information as the first TCI state include the first TCI state.

Optionally, in a case that the transmission mode of the target uplink channel is a repetition mode, or the type of the target uplink channel is PUSCH or UL RS resource and target DCI scheduling the target uplink channel simultaneously schedules at least two PUSCHs or at least two UL RS resources;
the uplink TCI state determining apparatus 500 further includes:
a second receiving module adapted to receive first feedback information from the terminal at a second occasion, where the first feedback information is used to indicate that the terminal has correctly received the common beam information;
a configuring module adapted to configure based on the first feedback information, the common beam information to take effect; and
a fourth determining module adapted to determine that repetition of the target uplink channel in a slot after a second occasion or a PUSCH or UL RS resource scheduled by the target DCI in a slot after the second occasion uses the common beam information for transmission, where the second occasion is an occasion when the common beam information takes effect.

The uplink TCI state determining apparatus 500 in the embodiments of this application can be an electronic device such as an electronic device with an operating system, or a component in an electronic device such as an integrated circuit or chip. The electronic device may be a network-side device or other devices than the network-side device. For example, the network-side device may include but is not limited to the types of the network-side devices 12 listed above, and the other devices may be servers, network attached storage (Network Attached Storage, NAS), or the like. This is not specifically limited in the embodiments of this application.

The uplink TCI state determining apparatus 500 provided in this embodiment of this application can implement the steps executed by the terminal in the method embodiment shown in FIG. 3, with the same technical effects achieved. To avoid repetition, details are not described herein again.

Optionally, as shown in FIG. 6, an embodiment of this application further provides a communication device 600 including a processor 601 and a memory 602. The memory 602 stores a program or instructions executable on the processor 601. For example, when the communication device 600 is a terminal, when the program or instructions are executed by the processor 601, the steps of the uplink TCI state determining method embodiment shown in FIG. 2 or 3 are implemented, with the same technical effects achieved. In a case that the communication device 600 is a terminal, when the program or instructions are executed by the processor 601, the steps of the method embodiment shown in FIG. 2 are implemented. In a case that the communication device 600 is a network-side device, when the program or instructions are executed by the processor 601, the steps of the method embodiment shown in FIG. 3 are implemented, with the same technical effects achieved. To avoid repetition, details are not described herein again.

An embodiment of this application further provides a terminal including a processor and a communication interface. The communication interface is adapted to obtain common beam information indicated by a network-side device, where the common beam information includes N first transmission configuration indicator TCI states, the first TCI state being a joint TCI state or a separate uplink UL TCI state, and N being an integer greater than or equal to 1. The processor is adapted to determine a target TCI state of a target uplink channel based on target information, where the target information includes at least one of the following:
the number of first TCI states;
arrangement order or arrangement positions of the first TCI states;
correspondence between the first TCI states and first identifier information;
type of the target uplink channel;
transmission mode of the target uplink channel;
time-domain behavior of the target uplink channel or time-domain behavior of information carried on the target uplink channel;
the number of first identifier information corresponding to the target uplink channel; and
value of the first identifier information corresponding to the target uplink channel; where
the first identifier information includes at least one of the following:
   control resource set CORESET index information;
   CORESET pool index CORESETPoolIndex;
   transmission reception point TRP identifier ID information;
   channel group identifier information;
   CORESET group index information; and
   physical uplink control channel PUCCH resource group identifier information.

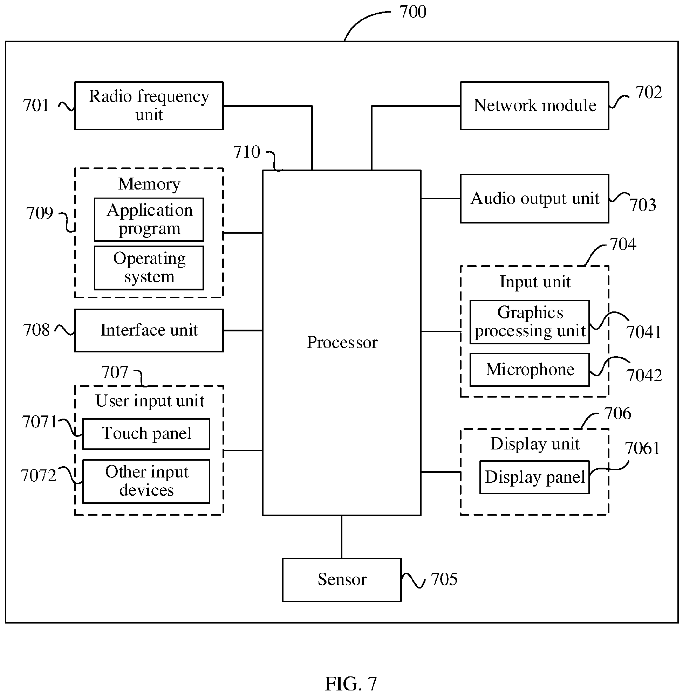

This terminal embodiment corresponds to the foregoing method embodiment on the terminal side. All processes and implementations in the foregoing method embodiment are applicable to this terminal embodiment, with the same technical effect achieved. Specifically, FIG. 7 is a schematic diagram of a hardware structure of a terminal implementing the embodiments of this application.

The terminal 700 includes but is not limited to at least part of these components: a radio frequency unit 701, a network module 702, an audio output unit 703, an input unit 704, a sensor 705, a display unit 706, a user input unit 707, an interface unit 708, a memory 709, a processor 710, and the like.

It can be understood by those skilled in the art that the terminal 700 may further include a power supply (for example, battery) supplying power to the components. The power supply may be logically connected to the processor 710 via a power management system, so that functions such as charge management, discharge management, and power consumption management are implemented via the power management system. The structure of the terminal shown in FIG. 7 does not constitute any limitation on the terminal, and the terminal may include more or fewer components than shown in the figure, or combine some of the components, or have different arrangements of the components. Details are not described herein.

It should be understood that in an embodiment of this application, the input unit 704 may include a graphics processing unit (Graphics Processing Unit, GPU) 7041 and a microphone 7042. The graphics processing unit 7041 processes image data of a static picture or video obtained by an image capture apparatus (such as a camera) in an image capture or video capture mode. The display unit 706 may include a display panel 7061, and the display panel 7061 may be configured in a form of a liquid crystal display, an organic light-emitting diode, or the like. The user input unit 707 includes at least one of a touch panel 7071 and other input devices 7072. The touch panel 7071 is also referred to as a touchscreen. The touch panel 7071 may include two parts: a touch detection apparatus and a touch controller. Specifically, the other input devices 7072 may include but are not limited to a physical keyboard, a function button (for example, volume control button or on/off button), a trackball, a mouse, and a joystick. Details are not described herein.

In an embodiment of this application, the radio frequency unit 701 receives downlink data from a network-side device and transfers the data to the processor 710 for processing; and the radio frequency unit 701 can additionally send uplink data to the network-side device. Generally, the radio frequency unit 701 includes but is not limited to an antenna, an amplifier, a transceiver, a coupler, a low noise amplifier, a duplexer, and the like.

The memory 709 may be adapted to store software programs or instructions and various data. The memory 709 may include a first storage area for storing programs or instructions and a second storage area for storing data. The first storage area may store an operating system, an application program or instructions required by at least one function (for example, a sound playback function or an image playback function), and the like. Additionally, the memory 709 may be a volatile memory or a non-volatile memory, or the memory 709 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 709 in the embodiments of this application includes but is not be limited to these or any other applicable types of memories.

The processor 710 may include one or more processing units. Optionally, the processor 710 may integrate an application processor and a modem processor. The application processor primarily processes operations involving an operating system, user interface, application program, or the like. The modem processor primarily processes radio communication signals, for example, being a baseband processor. It can be understood that the modem processor may alternatively be not integrated in the processor 710.

The radio frequency unit 701 is adapted to obtain common beam information indicated by a network-side device, where the common beam information includes N first transmission configuration indicator TCI states, the first TCI state being a joint TCI state or a separate uplink UL TCI state, and N being an integer greater than or equal to 1; and
the processor 710 is adapted to determine a target TCI state of a target uplink channel based on target information, where the target information includes at least one of the following:
the number of first TCI states;
arrangement order or arrangement positions of the first TCI states;
correspondence between the first TCI states and first identifier information;
type of the target uplink channel;
transmission mode of the target uplink channel;
time-domain behavior of the target uplink channel or time-domain behavior of information carried on the target uplink channel;
the number of first identifier information corresponding to the target uplink channel; and
value of the first identifier information corresponding to the target uplink channel; where
the first identifier information includes at least one of the following:
   control resource set CORESET index information;
   CORESET pool index CORESETPoolIndex;
   transmission reception point TRP identifier ID information;
   channel group identifier information;
   CORESET group index information; and
   physical uplink control channel PUCCH resource group identifier information.

Optionally, in a case that the target information includes the number of first TCI states, the determining, by the processor 710, a target TCI state of a target uplink channel based on target information includes:
in a case that the terminal adopts single-beam transmission, if the number of first TCI states is one, determining that the transmission mode of the target uplink channel is the single-beam transmission;
in a case that the terminal adopts single-beam transmission, if the number of first TCI states is at least two, determining that the transmission mode of the target uplink channel is the single-beam transmission, a repetition mode, or a multi-beam simultaneous transmission mode;
in a case that the terminal adopts a repetition mode or multi-beam simultaneous transmission mode, if the number of first TCI states is one, determining that the transmission mode of the target uplink channel is single-beam transmission, the repetition mode, or the multi-beam simultaneous transmission mode; or
in a case that the terminal adopts a repetition mode or a multi-beam simultaneous transmission mode, if the number of first TCI states is at least two, determining that the transmission mode of the target uplink channel is the repetition mode or the multi-beam simultaneous transmission mode.

Optionally, in a case that the number of first TCI states is greater than K, K being the number of TCI states required by the target uplink channel, the determining, by the processor 710, a target TCI state of a target uplink channel based on target information includes:
determining that K first TCI states arranged at preset positions are target TCI states of the target uplink channel; or
determining the target TCI state of the target uplink channel based on indication of first indication information from the network-side device, where the first indication information is used to indicate K first TCI states.

Optionally, the first indication information is carried in a first signaling field, the first signaling field being a signaling field in medium access control MAC control element CE signaling or DCI signaling.

Optionally, the first signaling field is effective or present in a case that a preset condition is met, the preset condition including at least one of the following:
the network-side device has configured the first signaling field;
the network-side device has indicated at least two first TCI states through DCI signaling; and
in a TCI codepoint activated by the network-side device through a medium access control MAC control element CE, at least one codepoint corresponds to at least two TCI states.

Optionally, in a case that the target uplink channel has M TCI states, if the number of first TCI states is at least M, the target TCI state is at least M first TCI states, M being an integer greater than or equal to 2;
in a case that the target uplink channel has M TCI states, if N is less than M, the target TCI state is M original TCI states of the target uplink channel, the target TCI state is (M-N) original TCI states and the N first TCI states of the target uplink channel, or the target TCI states are the N first TCI states; or
in a case that the target uplink channel has one TCI state, if the number of first TCI states is at least one, the target TCI state is at least one first TCI state.

Optionally, before the determining, by the processor 710, a target TCI state of a target uplink channel based on target information,
the radio frequency unit 701 is further adapted to receive second indication information from the network-side device; and
the processor 710 is further adapted to determine the transmission mode of the target uplink channel based on the second indication information, and the transmission mode includes: a preset transmission mode, a repetition mode, a multi-beam simultaneous transmission mode, or a transmission mode dynamically switching among the preset transmission mode, the repetition mode, and the multi-beam simultaneous transmission mode, where the preset transmission mode is single-beam transmission without repetition.

Optionally, the second indication information is used to indicate the transmission mode, or the second indication information is used to indicate the number of target TCI states.

Optionally, the type of the target uplink channel includes at least one of the following: physical uplink control channel PUCCH, physical uplink shared channel PUSCH, and UL reference signal RS resource.

Optionally, the PUCCH includes at least one of the following:
any PUCCH;
PUCCH scheduled by or associated with a preset physical downlink control channel PDCCH; and
terminal-specific PUCCH; and/or
the PUSCH includes at least one of the following:
   any PUSCH;
   PUSCH scheduled by or associated with a preset PDCCH;
   dynamically scheduled PUSCH;
   terminal-specific PUSCH; and
   configured grant PUSCH.

Optionally, the preset PDCCH includes at least one of the following:
all PDCCHs, a PDCCH in a control resource set CORESET specific to the terminal, a PDCCH in a CORESET associated with only a UE-specific search space USS, a PDCCH in a CORESET associated with a USS and a common search space CSS, a PDCCH in a CORESET associated with only a CSS, and a PDCCH in a CORESET other than CORESET#0.

Optionally, in a case that the number of first TCI states is greater than 1:
the target TCI state includes at least one of the following:
all first TCI states;
at least two first TCI states indicated by the network-side device of all the first TCI states, configured for the target uplink channel in a repetition mode or multi-beam simultaneous transmission mode;
one first TCI state indicated by the network-side device of all the first TCI states;
a first TCI state the same as a TCI state of a first PDCCH, where the first PDCCH is used to schedule or trigger the target uplink channel, the first PDCCH is used to schedule a target PDSCH and feedback information for the target PDSCH is carried on the target uplink channel, or the first PDCCH is associated with the target uplink channel;
a first TCI state corresponding to the first identifier information associated with the target uplink channel;
first TCI states of repetitions of the target uplink channel, where the first TCI states of the repetitions of the target uplink channel correspond to different first identifier information;
at least two first TCI states corresponding to at least two pieces of first identifier information, where the target uplink channel is associated with the at least two pieces of first identifier information;
at least one first TCI state corresponding to one piece of first identifier information, where the target uplink channel is associated with the one piece of first identifier information; and
at least two first TCI states determined based on preset correspondence.

Optionally, the preset correspondence includes:
the arrangement order or arrangement positions of the first TCI states correspond to TCI states of repetitions of the target uplink channel; or
the arrangement order or arrangement positions of the first TCI states correspond to each TCI state of the target uplink channel.

Optionally, in a case that the number of first TCI states is greater than 1, if the transmission mode of the target uplink channel is a preset transmission mode, the target TCI state includes a first preset TCI state, where the first preset TCI state includes at least one of the following:
a first TCI state arranged at a preset position in all first TCI states;
a first TCI state corresponding to preset first identifier information; and
a first TCI state indicated by the network-side device of all first TCI states.

Optionally, in a case that the time-domain behavior of the target uplink channel is a periodic uplink channel or the time-domain behavior of the information carried on the target uplink channel is periodic information, the target TCI state includes at least one of the following:
a TCI state other than the first TCI states in a TCI state pool, or an original TCI state of the target uplink channel;
a first TCI state corresponding to the first identifier information associated with the target uplink channel;
a first TCI state indicated by third indication information from the network-side device; and
a second preset TCI state; where
the second preset TCI state includes at least one of the following:
   a first TCI state arranged at a preset position in all first TCI states; and
   a first TCI state corresponding to preset first identifier information.

Optionally, the third indication information is in configuration information of the target uplink channel.

Optionally, in a case that the number of first TCI states is greater than 1, if the type of the target uplink channel is PUSCH or UL RS resource or UL RS resource set, the target TCI state includes at least one of the following:
a first TCI state corresponding to a first codepoint or at least one of the first TCI state corresponding to the first codepoint, where the first codepoint is a codepoint indicated by a TCI field in DCI indicating the first TCI state;
a first TCI state corresponding to preset first identifier information;
a first TCI state the same as a TCI state of a PDCCH in which DCI scheduling the target uplink channel is;
a first TCI state corresponding to the first identifier information associated with a PDCCH in which a DCI scheduling the target uplink channel is; and
a first TCI state corresponding to the first identifier information associated with the target uplink channel.

Optionally, in a case that a transmission mode of a PDCCH in which DCI indicating the first TCI state is or PDCCH scheduling the target uplink channel is a repetition mode or multi-beam simultaneous transmission mode, the target TCI state includes:
a first TCI state the same as a TCI state of the PDCCH in repetition or multi-beam simultaneous transmission, or at least one first TCI state in a first TCI state used by the PDCCH in repetition or multi-beam simultaneous transmission.

Optionally, in a case that the number of first TCI states is greater than 1, if the type of the target uplink channel is PUSCH in uplink configured grant type 1, the target TCI state includes at least one of the following:
a first TCI state corresponding to preset CORESETPoolIndex, where the preset CORESETPoolIndex includes CORESETPoolIndex corresponding to signaling carrying PUSCH configuration information, or the preset CORESETPoolIndex is CORESETPoolIndex with a preset value;
a first TCI state arranged at a preset position in all the first TCI states;
a first TCI state corresponding to a TCI state identifier or CORESETPoolIndex indicated by configuration information of the PUSCH in uplink configured grant type 1;
a first TCI state of a preset SRS resource, where the preset SRS resource is an SRS resource indicated by a sounding reference signal SRS resource indicator SRI in configuration information of the PUSCH in uplink configured grant type 1; and
at least one first TCI state determined based on a power control parameter in configuration information of the PUSCH in uplink configured grant type 1.

Optionally, in a case that the number of first TCI states is greater than 1, if the type of the target uplink channel is UL RS resource or resource set, the target TCI state includes:
a first TCI state of the first identifier information associated with the UL RS resource or resource set;
a first TCI state the same as a TCI state of a PDCCH triggering the UL RS resource or resource set; and
a first TCI state corresponding to the UL RS resource or resource set, where each UL RS resource or resource set has its respective corresponding TCI state.

Optionally, in a case that the number of first TCI states is equal to 1, if the transmission mode of the target uplink channel is a repetition mode or multi-beam simultaneous transmission mode, the determining, by the processor 710, a target TCI state of a target uplink channel based on target information includes at least one of the following:
determining that a configuration of the repetition mode or multi-beam simultaneous transmission mode of the target uplink channel is ineffective;
determining that the target uplink channel is transmitted based on the first TCI state;
determining that the target TCI state includes at least two original TCI states of the target uplink channel; and
determining to update a third preset TCI state in at least two original TCI states of the target uplink channel to the first TCI state; where the third preset TCI state corresponds to the same first identifier information as the first TCI state, the preset TCI state is one located at a preset position in the at least two original TCI states of the target uplink channel, or the third preset TCI state is associated with the first TCI state.

Optionally, in a case that the number of first TCI states is equal to 1, the determining, by the processor 710, a target TCI state of a target uplink channel based on target information includes at least one of the following:
in a case that the target uplink channel corresponds to the same first identifier information as the first TCI state, determining that the target TCI state includes the first TCI state;
in a case that the target uplink channel and the first TCI state correspond to different first identifier information, determining that the target TCI state includes an original TCI state of the target uplink channel or that the target uplink channel stops transmission; and
determining that the target TCI state includes a TCI state of a PDCCH scheduling or triggering the target uplink channel; or
in a case that the number of first TCI states is equal to 1, if the target uplink channel originally has at least two TCI states, the determining, by the processor 710, a target TCI state of a target uplink channel based on target information includes:
   determining that the target TCI state is the first TCI state;
   determining that the target TCI state includes at least two original TCI states of the target uplink channel; or
   determining to update a fourth preset TCI state in at least two original TCI states of the target uplink channel to the first TCI state; where the fourth preset TCI state corresponds to the same first identifier information as the first TCI state, the fourth preset TCI state is one arranged at a preset position in the at least two original TCI states of the target uplink channel, or the fourth preset TCI state is associated with the first TCI state.

Optionally, in a case that the type of the target uplink channel is UL RS resource or resource set, the determining, by the processor 710, that the target TCI state is the first TCI state includes:
determining that target TCI states of all RS resources in UL RS resources or resource set associated with the first TCI state include the first TCI state; or
determining that target TCI states of all RS resources in UL RS resources or resource set corresponding to the same first identifier information as the first TCI state include the first TCI state.

Optionally, in a case that the transmission mode of the target uplink channel is a repetition mode, or the type of the target uplink channel is PUSCH or UL RS resource and target DCI scheduling the target uplink channel simultaneously schedules at least two PUSCHs or at least two UL RS resources;
after obtaining the common beam information indicated by the network-side device, the radio frequency unit 701 is further adapted to send first feedback information to the network-side device at a first occasion, the first feedback information being used to indicate that the terminal has correctly received the common beam information; and
the processor 710 is further adapted to determine that repetition of the target uplink channel in a slot after a second occasion or a PUSCH or UL RS resource scheduled by the target DCI in a slot after the second occasion uses the common beam information for transmission, where a time difference between the second occasion and the first occasion is a first preset duration, and the second occasion is later than the first occasion.

The terminal 700 provided in this embodiment of this application can implement the processes executed by the uplink TCI state determining apparatus 400 shown in FIG. 4, with the same technical effects achieved. To avoid repetition, details are not described herein again.

An embodiment of this application further provides a network-side device including a processor and a communication interface. The processor is adapted to indicate common beam information to a terminal, where the common beam information includes N first transmission configuration indicator TCI states, the first TCI state being a joint TCI state or a separate uplink UL TCI state, and N being an integer greater than or equal to 1. The processor is adapted to determine a target TCI state of a target uplink channel based on target information, where the target information includes at least one of the following:
the number of first TCI states;
arrangement order or arrangement positions of the first TCI states;
correspondence between the first TCI states and first identifier information;
type of the target uplink channel;
transmission mode of the target uplink channel;
time-domain behavior of the target uplink channel or time-domain behavior of information carried on the target uplink channel;
the number of first identifier information corresponding to the target uplink channel; and
value of the first identifier information corresponding to the target uplink channel; where
the first identifier information includes at least one of the following:
   control resource set CORESET index information;
   CORESET pool index CORESETPoolIndex;
   transmission reception point TRP identifier ID information;
   channel group identifier information;
   CORESET group index information; and
   physical uplink control channel PUCCH resource group identifier information.

This network-side device embodiment corresponds to the foregoing network-side device method embodiment. All processes and implementations in the foregoing method embodiment are applicable to this network-side device embodiment, with the same technical effect achieved.

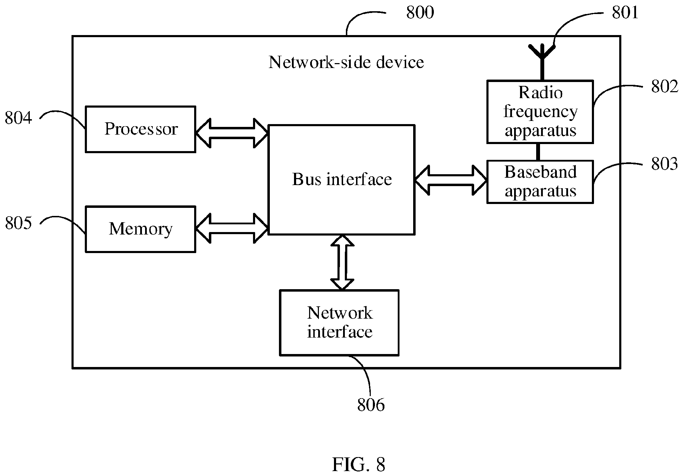

Specifically, an embodiment of this application further provides a network-side device. As shown in FIG. 8, the network-side device 800 includes an antenna 801, a radio frequency apparatus 802, a baseband apparatus 803, a processor 804, and memory 805. The antenna 801 is connected to the radio frequency apparatus 802. In uplink, the radio frequency apparatus 802 receives information through the antenna 801, and sends the received information to the baseband apparatus 803 for processing. Downlink, the baseband apparatus 803 processes to-be-sent information, and sends the information to the radio frequency apparatus 802; and the radio frequency apparatus 802 processes the received information and then sends the information out through the antenna 801.

The method executed by the network-side device in the aforesaid embodiments may be implemented on the baseband apparatus 803. The baseband apparatus 803 includes a baseband processor.

The baseband apparatus 803 may include, for example, at least one baseband board, where a plurality of chips are disposed on the baseband board. As shown in FIG. 8, one of the chips is, for example, a baseband processor, and connected to the memory 805 through a bus interface, to invoke the program in the memory 805 to perform the operations of the network device shown in the foregoing method embodiment.

The network-side device further includes a network interface 806, where the interface is, for example, a common public radio interface (Common Public Radio Interface, CPRI).

Specifically, the network-side device 800 in this embodiment of the present invention further includes: an instruction or program stored in the memory 805 and executable on the processor 804. The processor 804 invokes the instruction or program in the memory 805 to execute the method executed by the modules shown in FIG. 5, with the same technical effects achieved. To avoid repetition, details are not described herein again.

An embodiment of this application further provides a readable storage medium. The readable storage medium stores a program or instructions. When the program or instructions are executed by a processor, the processes of the uplink TCI state determining method embodiment in FIG. 2 or 3 are implemented, with the same technical effects achieved. To avoid repetition, details are not described herein again.

The processor is a processor in the terminal described in the foregoing embodiment. The readable storage medium includes a computer-readable storage medium such as a computer read-only memory ROM, a random access memory RAM, a magnetic disk, or an optical disc.

An embodiment of this application further provides a chip. The chip includes a processor and a communication interface. The communication interface is coupled to the processor. The processor is adapted to run a program or instructions to implement the processes of the uplink TCI state determining method embodiment in FIG. 2 or 3, with the same technical effects achieved. To avoid repetition, details are not described herein again.

It should be understood that the chip mentioned in the embodiments of this application may also be referred to as a system-level chip, a system chip, a chip system, a system-on-chip, or the like.

An embodiment of this application further provides a computer program/program product, where the computer program/program product is stored in a readable storage medium, and the computer program/program product is executed by at least one processor to implement the processes of the uplink TCI state determining method embodiment shown in FIG. 2 or 3, with the same technical effects achieved. To avoid repetition, details are not described herein again.

An embodiment of this application further provides a wireless communication system including a terminal and a network-side device. The terminal may be adapted to execute the steps of the uplink TCI state determining method shown in FIG. 2, and the network-side device may be adapted to execute the steps of the uplink TCI state determining method shown in FIG. 3.

It should be noted that the terms "include", "comprise", or any of their variants are intended to cover a non-exclusive inclusion, such that a process, method, article, or apparatus that includes a series of elements includes not only those elements but also other elements that are not expressly listed, or further includes elements inherent to such process, method, article, or apparatus. Without more constraints, an element preceded by "includes a..." does not preclude the presence of other identical elements in the process, method, article, or apparatus that includes the element. In addition, it should be noted that the scope of the method and apparatus. In implementations of this application is not limited to functions being performed in the order shown or discussed, but may further include functions being performed at substantially the same time or in a reverse order, depending on the functions involved. For example, the described method may be performed in an order different from the order described, and steps may be added, omitted, or combined. In addition, features described with reference to some examples may be combined in other examples.

Based on the above description of embodiments, persons skilled in the art can clearly understand that the method in the foregoing embodiments can be implemented through software on a necessary hardware platform or certainly through hardware only, but in many cases, the former is the more preferred implementation. Based on such an understanding, the technical solutions of this application essentially, or the part contributing to the prior art may be implemented in a form of a computer software product. The computer software product is stored in a storage medium (for example, a ROM/RAM, a magnetic disk, or an optical disc), and includes several instructions for instructing a terminal (which may be a mobile phone, a computer, a server, an air conditioner, a network device, or the like) to perform the method described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

## Claims

1. An uplink TCI state determining method, comprising:
obtaining, by a terminal, common beam information indicated by a network-side device, wherein the common beam information comprises N first transmission configuration indicator TCI states, the first TCI state being a joint TCI state or a separate uplink UL TCI state, and N being an integer greater than or equal to 1; and
determining, by the terminal, a target TCI state of a target uplink channel based on target information, wherein the target information comprises at least one of the following:
the number of first TCI states;
arrangement order or arrangement positions of the first TCI states;
correspondence between the first TCI states and first identifier information;
type of the target uplink channel;
transmission mode of the target uplink channel;
time-domain behavior of the target uplink channel or time-domain behavior of information carried on the target uplink channel;
the number of first identifier information corresponding to the target uplink channel; and
value of the first identifier information corresponding to the target uplink channel; wherein
the first identifier information comprises at least one of the following:
control resource set CORESET index information;
CORESET pool index CORESETPoolIndex;
transmission reception point TRP identifier ID information;
channel group identifier information;
CORESET group index information; and
physical uplink control channel PUCCH resource group identifier information.

2. The method according to claim 1, wherein in a case that the target information comprises the number of first TCI states, the determining, by the terminal, a target TCI state of a target uplink channel based on target information comprises:
in a case that the terminal adopts single-beam transmission, if the number of first TCI states is one, determining, by the terminal, that the transmission mode of the target uplink channel is the single-beam transmission;
in a case that the terminal adopts single-beam transmission, if the number of first TCI states is at least two, determining, by the terminal, that the transmission mode of the target uplink channel is the single-beam transmission, a repetition mode, or a multi-beam simultaneous transmission mode;
in a case that the terminal adopts a repetition mode or multi-beam simultaneous transmission mode, if the number of first TCI states is one, determining, by the terminal, that the transmission mode of the target uplink channel is single-beam transmission, the repetition mode, or the multi-beam simultaneous transmission mode; or
in a case that the terminal adopts a repetition mode or a multi-beam simultaneous transmission mode, if the number of first TCI states is at least two, determining, by the terminal, that the transmission mode of the target uplink channel is the repetition mode or the multi-beam simultaneous transmission mode.

3. The method according to claim 1, wherein in a case that the number of first TCI states is greater than K, K being the number of TCI states required by the target uplink channel, the determining, by the terminal, a target TCI state of a target uplink channel based on target information comprises:
determining, by the terminal, that K first TCI states arranged at preset positions are target TCI states of the target uplink channel; or
determining, by the terminal, the target TCI state of the target uplink channel based on indication of first indication information from the network-side device, wherein the first indication information is used to indicate K first TCI states.

4. The method according to claim 3, wherein the first indication information is carried in a first signaling field, the first signaling field being a signaling field in medium access control MAC control element CE signaling or DCI signaling.

5. The method according to claim 4, wherein the first signaling field is effective or present in a case that a preset condition is met, the preset condition comprising at least one of the following:
the network-side device has configured the first signaling field;
the network-side device has indicated at least two first TCI states through DCI signaling; and
in a TCI codepoint activated by the network-side device through a medium access control MAC control element CE, at least one codepoint corresponds to at least two TCI states.

6. The method according to any one of claims 1 to 5, wherein
in a case that the target uplink channel has M TCI states, if the number of first TCI states is at least M, the target TCI state is at least M first TCI states, M being an integer greater than or equal to 2;
in a case that the target uplink channel has M TCI states, if N is less than M, the target TCI state is M original TCI states of the target uplink channel, the target TCI state is (M-N) original TCI states and the N first TCI states of the target uplink channel, or the target TCI states are the N first TCI states; or
in a case that the target uplink channel has one TCI state, if the number of first TCI states is at least one, the target TCI state is at least one first TCI state.

7. The method according to any one of claims 1 to 5, wherein before the determining, by the terminal, a target TCI state of a target uplink channel based on target information, the method further comprises:
receiving, by the terminal, second indication information from the network-side device, and determining the transmission mode of the target uplink channel based on the second indication information, wherein the transmission mode comprises: a preset transmission mode, a repetition mode, a multi-beam simultaneous transmission mode, or a transmission mode dynamically switching among the preset transmission mode, the repetition mode, and the multi-beam simultaneous transmission mode, wherein the preset transmission mode is single-beam transmission without repetition.

8. The method according to claim 7, wherein the second indication information is used to indicate the transmission mode, or the second indication information is used to indicate the number of target TCI states.

9. The method according to any one of claims 1 to 5, wherein the type of the target uplink channel comprises at least one of the following: physical uplink control channel PUCCH, physical uplink shared channel PUSCH, and UL reference signal RS resource.

10. The method according to claim 9, wherein
the PUCCH comprises at least one of the following:
any PUCCH;
PUCCH scheduled by or associated with a preset physical downlink control channel PDCCH; and
terminal-specific PUCCH; and/or
the PUSCH comprises at least one of the following:
any PUSCH;
PUSCH scheduled by or associated with a preset PDCCH;
dynamically scheduled PUSCH;
terminal-specific PUSCH; and
configured grant PUSCH.

11. The method according to claim 10, wherein the preset PDCCH comprises at least one of the following:
all PDCCHs, a PDCCH in a control resource set CORESET specific to the terminal, a PDCCH in a CORESET associated with only a UE-specific search space USS, a PDCCH in a CORESET associated with a USS and a common search space CSS, a PDCCH in a CORESET associated with only a CSS, and a PDCCH in a CORESET other than CORESET#0.

12. The method according to claim 1, wherein in a case that the number of first TCI states is greater than 1:
the target TCI state comprises at least one of the following:
all first TCI states;
at least two first TCI states indicated by the network-side device of all the first TCI states, configured for the target uplink channel in a repetition mode or multi-beam simultaneous transmission mode;
one first TCI state indicated by the network-side device of all the first TCI states;
a first TCI state the same as a TCI state of a first PDCCH, wherein the first PDCCH is used to schedule or trigger the target uplink channel, the first PDCCH is used to schedule a target PDSCH and feedback information for the target PDSCH is carried on the target uplink channel, or the first PDCCH is associated with the target uplink channel;
a first TCI state corresponding to the first identifier information associated with the target uplink channel;
first TCI states of repetitions of the target uplink channel, wherein the first TCI states of the repetitions of the target uplink channel correspond to different first identifier information;
at least two first TCI states corresponding to at least two pieces of first identifier information, wherein the target uplink channel is associated with the at least two pieces of first identifier information;
at least one first TCI state corresponding to one piece of first identifier information, wherein the target uplink channel is associated with the one piece of first identifier information; and
at least two first TCI states determined based on preset correspondence.

13. The method according to claim 12, wherein the preset correspondence comprises:
the arrangement order or arrangement positions of the first TCI states correspond to TCI states of repetitions of the target uplink channel; or
the arrangement order or arrangement positions of the first TCI states correspond to each TCI state of the target uplink channel.

14. The method according to claim 1, wherein in a case that the number of first TCI states is greater than 1, if the transmission mode of the target uplink channel is a preset transmission mode, the target TCI state comprises a first preset TCI state, wherein the first preset TCI state comprises at least one of the following:
a first TCI state arranged at a preset position in all first TCI states;
a first TCI state corresponding to preset first identifier information; and
a first TCI state indicated by the network-side device of all first TCI states.

15. The method according to claim 1, wherein in a case that the time-domain behavior of the target uplink channel is a periodic uplink channel or the time-domain behavior of the information carried on the target uplink channel is periodic information, the target TCI state comprises at least one of the following:
a TCI state other than the first TCI states in a TCI state pool, or an original TCI state of the target uplink channel;
a first TCI state corresponding to the first identifier information associated with the target uplink channel;
a first TCI state indicated by third indication information from the network-side device; and
a second preset TCI state; wherein
the second preset TCI state comprises at least one of the following:
a first TCI state arranged at a preset position in all first TCI states; and
a first TCI state corresponding to preset first identifier information.

16. The method according to claim 15, wherein the third indication information is in configuration information of the target uplink channel.

17. The method according to claim 1, wherein in a case that the number of first TCI states is greater than 1, if the type of the target uplink channel is PUSCH or UL RS resource or UL RS resource set, the target TCI state comprises at least one of the following:
a first TCI state corresponding to a first codepoint or at least one of the first TCI state corresponding to the first codepoint, wherein the first codepoint is a codepoint indicated by a TCI field in DCI indicating the first TCI state;
a first TCI state corresponding to preset first identifier information;
a first TCI state the same as a TCI state of a PDCCH in which DCI scheduling the target uplink channel is;
a first TCI state corresponding to the first identifier information associated with a PDCCH in which a DCI scheduling the target uplink channel is; and
a first TCI state corresponding to the first identifier information associated with the target uplink channel.

18. The method according to claim 17, wherein in a case that a transmission mode of a PDCCH in which DCI indicating the first TCI state is or PDCCH scheduling the target uplink channel is a repetition mode or multi-beam simultaneous transmission mode, the target TCI state comprises:
a first TCI state the same as a TCI state of the PDCCH in repetition or multi-beam simultaneous transmission, or at least one first TCI state in a first TCI state used by the PDCCH in repetition or multi-beam simultaneous transmission.

19. The method according to claim 1, wherein in a case that the number of first TCI states is greater than 1, if the type of the target uplink channel is PUSCH in uplink configured grant type 1, the target TCI state comprises at least one of the following:
a first TCI state corresponding to preset CORESETPoolIndex, wherein the preset CORESETPoolIndex comprises CORESETPoolIndex corresponding to signaling carrying PUSCH configuration information, or the preset CORESETPoolIndex is CORESETPoolIndex with a preset value;
a first TCI state arranged at a preset position in all the first TCI states;
a first TCI state corresponding to a TCI state identifier or CORESETPoolIndex indicated by configuration information of the PUSCH in uplink configured grant type 1;
a first TCI state of a preset SRS resource, wherein the preset SRS resource is an SRS resource indicated by a sounding reference signal SRS resource indicator SRI in configuration information of the PUSCH in uplink configured grant type 1; and
at least one first TCI state determined based on a power control parameter in configuration information of the PUSCH in uplink configured grant type 1.

20. The method according to claim 1, wherein in a case that the number of first TCI states is greater than 1, if the type of the target uplink channel is UL RS resource or resource set, the target TCI state comprises:
a first TCI state of the first identifier information associated with the UL RS resource or resource set;
a first TCI state the same as a TCI state of a PDCCH triggering the UL RS resource or resource set; and
a first TCI state corresponding to the UL RS resource or resource set, wherein each UL RS resource or resource set has its respective corresponding TCI state.

21. The method according to claim 1, wherein in a case that the number of first TCI states is equal to 1, if the transmission mode of the target uplink channel is a repetition mode or multi-beam simultaneous transmission mode, the determining, by the terminal, a target TCI state of a target uplink channel based on target information comprises at least one of the following:
determining, by the terminal, that a configuration of the repetition mode or multi-beam simultaneous transmission mode of the target uplink channel is ineffective;
determining, by the terminal, that the target uplink channel is transmitted based on the first TCI state;
determining, by the terminal, that the target TCI state comprises at least two original TCI states of the target uplink channel; and
determining, by the terminal, to update a third preset TCI state in at least two original TCI states of the target uplink channel to the first TCI state; wherein the third preset TCI state corresponds to the same first identifier information as the first TCI state, the preset TCI state is one located at a preset position in the at least two original TCI states of the target uplink channel, or the third preset TCI state is associated with the first TCI state.

22. The method according to claim 1, wherein in a case that the number of first TCI states is equal to 1, the determining, by the terminal, a target TCI state of a target uplink channel based on target information comprises at least one of the following:
in a case that the target uplink channel corresponds to the same first identifier information as the first TCI state, determining, by the terminal, that the target TCI state comprises the first TCI state;
in a case that the target uplink channel and the first TCI state correspond to different first identifier information, determining, by the terminal, that the target TCI state comprises an original TCI state of the target uplink channel or that the target uplink channel stops transmission; and
determining, by the terminal, that the target TCI state comprises a TCI state of a PDCCH scheduling or triggering the target uplink channel; or
in a case that the number of first TCI states is equal to 1, if the target uplink channel originally has at least two TCI states, the determining, by the terminal, a target TCI state of a target uplink channel based on target information comprises:
determining, by the terminal, that the target TCI state is the first TCI state;
determining, by the terminal, that the target TCI state comprises at least two original TCI states of the target uplink channel; or
determining, by the terminal, to update a fourth preset TCI state in at least two original TCI states of the target uplink channel to the first TCI state; wherein the fourth preset TCI state corresponds to the same first identifier information as the first TCI state, the fourth preset TCI state is one arranged at a preset position in the at least two original TCI states of the target uplink channel, or the fourth preset TCI state is associated with the first TCI state.

23. The method according to claim 22, wherein in a case that the type of the target uplink channel is UL RS resource or resource set, the determining, by the terminal, that the target TCI state is the first TCI state comprises:
determining, by the terminal, that target TCI states of all RS resources in UL RS resources or resource set associated with the first TCI state comprise the first TCI state; or
determining, by the terminal, that target TCI states of all RS resources in UL RS resources or resource set corresponding to the same first identifier information as the first TCI state comprise the first TCI state.

24. The method according to claim 1, wherein in a case that the transmission mode of the target uplink channel is a repetition mode, or the type of the target uplink channel is PUSCH or UL RS resource and target DCI scheduling the target uplink channel simultaneously schedules at least two PUSCHs or at least two UL RS resources;
after the terminal obtains the common beam information indicated by the network-side device, the method further comprises:
sending, by the terminal, first feedback information to the network-side device at a first occasion, the first feedback information being used to indicate that the terminal has correctly received the common beam information; and
determining, by the terminal, that repetition of the target uplink channel in a slot after a second occasion or a PUSCH or UL RS resource scheduled by the target DCI in a slot after the second occasion uses the common beam information for transmission, wherein a time difference between the second occasion and the first occasion is a first preset duration, and the second occasion is later than the first occasion.

25. An uplink TCI state determining apparatus, applied to a terminal, wherein the apparatus comprises:
an obtaining module adapted to obtain common beam information indicated by a network-side device, wherein the common beam information comprises N first transmission configuration indicator TCI states, the first TCI state being a joint TCI state or a separate uplink UL TCI state, and N being an integer greater than or equal to 1; and
a first determining module adapted to determine a target TCI state of a target uplink channel based on target information, wherein the target information comprises at least one of the following:
the number of first TCI states;
arrangement order or arrangement positions of the first TCI states;
correspondence between the first TCI states and first identifier information;
type of the target uplink channel;
transmission mode of the target uplink channel;
time-domain behavior of the target uplink channel or time-domain behavior of information carried on the target uplink channel;
the number of first identifier information corresponding to the target uplink channel; and
value of the first identifier information corresponding to the target uplink channel; wherein
the first identifier information comprises at least one of the following:
control resource set CORESET index information;
CORESET pool index CORESETPoolIndex;
transmission reception point TRP identifier ID information;
channel group identifier information;
CORESET group index information; and
physical uplink control channel PUCCH resource group identifier information.

26. An uplink TCI state determining method, comprising:
indicating, by a network-side device, common beam information to a terminal, wherein the common beam information comprises N first transmission configuration indicator TCI states, the first TCI state being a joint TCI state or a separate uplink UL TCI state, and N being an integer greater than or equal to 1; and
determining, by the network-side device, a target TCI state of a target uplink channel based on target information, wherein the target information comprises at least one of the following:
the number of first TCI states;
arrangement order or arrangement positions of the first TCI states;
correspondence between the first TCI states and first identifier information;
type of the target uplink channel;
transmission mode of the target uplink channel;
time-domain behavior of the target uplink channel or time-domain behavior of information carried on the target uplink channel;
the number of first identifier information corresponding to the target uplink channel; and
value of the first identifier information corresponding to the target uplink channel; wherein
the first identifier information comprises at least one of the following:
control resource set CORESET index information;
CORESET pool index CORESETPoolIndex;
transmission reception point TRP identifier ID information;
channel group identifier information;
CORESET group index information; and
physical uplink control channel PUCCH resource group identifier information.

27. The method according to claim 26, wherein in a case that the target information comprises the number of first TCI states, the determining, by the network-side device, a target TCI state of a target uplink channel based on target information comprises:
in a case that the terminal adopts single-beam transmission, if the number of first TCI states is one, determining, by the network-side device, that the transmission mode of the target uplink channel is the single-beam transmission;
in a case that the terminal adopts single-beam transmission, if the number of first TCI states is at least two, determining, by the network-side device, that the transmission mode of the target uplink channel is the single-beam transmission, a repetition mode, or a multi-beam simultaneous transmission mode;
in a case that the terminal adopts a repetition mode or multi-beam simultaneous transmission mode, if the number of first TCI states is one, determining, by the network-side device, that the transmission mode of the target uplink channel is single-beam transmission, the repetition mode, or the multi-beam simultaneous transmission mode; or
in a case that the terminal adopts a repetition mode or a multi-beam simultaneous transmission mode, if the number of first TCI states is at least two, determining, by the network-side device, that the transmission mode of the target uplink channel is the repetition mode or the multi-beam simultaneous transmission mode.

28. The method according to claim 26, wherein in a case that the number of first TCI states is greater than K, K being the number of TCI states required by the target uplink channel, the determining, by the network-side device, a target TCI state of a target uplink channel based on the first TCI state comprises:
determining, by the network-side device, that K first TCI states arranged at preset positions are target TCI states of the target uplink channel; or
determining, by the network-side device, K first TCI states from all the first TCI states as the target TCI states, and sending first indication information to the terminal, wherein the first indication information is used to indicate the K first TCI states.

29. The method according to claim 28, wherein the first indication information is carried in a first signaling field, the first signaling field being a signaling field in medium access control MAC control element CE signaling or DCI signaling.

30. The method according to any one of claims 26 to 29, wherein
in a case that the target uplink channel has M TCI states, if the number of first TCI states is at least M, the target TCI state is at least M first TCI states, M being an integer greater than or equal to 2;
in a case that the target uplink channel has M TCI states, if N is less than M, the target TCI state is M original TCI states of the target uplink channel, the target TCI state is (M-N) original TCI states and the N first TCI states of the target uplink channel, or the target TCI states are the N first TCI states; or
in a case that the target uplink channel has one TCI state, if the number of first TCI states is at least one, the target TCI state is at least one first TCI state.

31. The method according to any one of claims 26 to 29, wherein the target information further comprises the transmission mode of the target uplink channel, and the transmission mode comprises: a preset transmission mode, a repetition mode, a multi-beam simultaneous transmission mode, or a transmission mode dynamically switching among the preset transmission mode, the repetition mode, and the multi-beam simultaneous transmission mode, wherein the preset transmission mode is single-beam transmission without repetition; and
determining, by the network-side device, a target TCI state of a target uplink channel based on target information comprises:
determining, by the network-side device, the target TCI state of the target uplink channel from the first TCI states based on the transmission mode of the target uplink channel; and
the method further comprises:
sending, by the network-side device, second indication information to the terminal, wherein the second indication information is used to indicate the transmission mode of the target uplink channel.

32. The method according to any one of claims 26 to 29, wherein the type of the target uplink channel comprises at least one of the following: physical uplink control channel PUCCH, physical uplink shared channel PUSCH, and UL reference signal RS resource.

33. The method according to claim 32, wherein
the PUCCH comprises at least one of the following:
any PUCCH;
PUCCH scheduled by or associated with a preset physical downlink control channel PDCCH; and
terminal-specific PUCCH; and/or
the PUSCH comprises at least one of the following:
any PUSCH;
PUSCH scheduled by or associated with a preset PDCCH;
dynamically scheduled PUSCH;
terminal-specific PUSCH; and
configured grant PUSCH.

34. The method according to claim 33, wherein the preset PDCCH comprises at least one of the following:
all PDCCHs, a PDCCH in a control resource set CORESET specific to the terminal, a PDCCH in a CORESET associated with only a UE-specific search space USS, a PDCCH in a CORESET associated with a USS and a common search space CSS, a PDCCH in a CORESET associated with only a CSS, and a PDCCH in a CORESET other than CORESET#0.

35. The method according to claim 26, wherein in a case that the number of first TCI states is greater than 1:
the target TCI state comprises at least one of the following:
all first TCI states;
at least two first TCI states indicated by the network-side device of all the first TCI states, configured for the target uplink channel in a repetition mode or multi-beam simultaneous transmission mode;
one first TCI state indicated by the network-side device of all the first TCI states;
a first TCI state the same as a TCI state of a first PDCCH, wherein the first PDCCH is used to schedule or trigger transmission of the target uplink channel, the first PDCCH is used to schedule a target PDSCH and feedback information for the target PDSCH is carried on the target uplink channel, or the first PDCCH is associated with the target uplink channel;
the target TCI state comprises a first TCI state corresponding to the first identifier information associated with the target uplink channel;
the target TCI state comprises first TCI states of repetitions of the target uplink channel, wherein the first TCI states of the repetitions of the target uplink channel correspond to different first identifier information;
at least two first TCI states corresponding to at least two pieces of first identifier information, wherein the target uplink channel is associated with the at least two pieces of first identifier information;
at least one first TCI state corresponding to one piece of first identifier information, wherein the target uplink channel is associated with the one piece of first identifier information; and
at least two first TCI states determined based on preset correspondence.

36. The method according to claim 35, wherein the preset correspondence comprises:
the arrangement order or arrangement positions of the first TCI states correspond to TCI states of repetitions of the target uplink channel; or
the arrangement order or arrangement positions of the first TCI states correspond to each TCI state of the target uplink channel.

37. The method according to claim 26, wherein in a case that the number of first TCI states is greater than 1, if the transmission mode of the target uplink channel is a preset transmission mode, the target TCI state comprises a first preset TCI state, wherein the first preset TCI state comprises at least one of the following:
a first TCI state arranged at a preset position in all first TCI states;
a first TCI state corresponding to preset first identifier information; and
a first TCI state indicated by the network-side device of all first TCI states.

38. The method according to claim 26, wherein in a case that the number of first TCI states is greater than 1 and the time-domain behavior of the target uplink channel is a periodic uplink channel or the time-domain behavior of the information carried on the target uplink channel is periodic information, the target TCI state comprises at least one of the following:
a TCI state other than the first TCI states in a TCI state pool, or an original TCI state of the target uplink channel;
a first TCI state corresponding to the first identifier information associated with the target uplink channel;
preset first TCI state;
a first TCI state indicated by third indication information from the network-side device; or
a second preset TCI state; wherein
the second preset TCI state comprises at least one of the following:
a first TCI state arranged at a preset position in all first TCI states; and
a first TCI state corresponding to preset first identifier information.

39. The method according to claim 26, wherein in a case that the number of first TCI states is greater than 1, if the type of the target uplink channel is PUSCH or UL RS resource or UL RS resource set, the target TCI state comprises at least one of the following:
a first TCI state corresponding to a first codepoint or at least one of the first TCI state corresponding to the first codepoint, wherein the first codepoint is a codepoint indicated by a TCI field in DCI indicating the first TCI state;
a first TCI state corresponding to preset first identifier information;
a first TCI state the same as a TCI state of a PDCCH in which DCI scheduling the target uplink channel is;
a first TCI state corresponding to the first identifier information associated with a PDCCH in which a DCI scheduling the target uplink channel is; and
a first TCI state corresponding to the first identifier information associated with the target uplink channel.

40. The method according to claim 39, wherein in a case that a transmission mode of a PDCCH in which DCI indicating the first TCI state is or PDCCH scheduling the target uplink channel is a repetition mode or multi-beam simultaneous transmission mode, the target TCI state comprises:
a first TCI state the same as a TCI state of the PDCCH in repetition or multi-beam simultaneous transmission, or at least one first TCI state in a first TCI state used by the PDCCH in repetition or multi-beam simultaneous transmission.

41. The method according to claim 26, wherein in a case that the number of first TCI states is greater than 1, if the type of the target uplink channel is PUSCH in uplink configured grant type 1, the target TCI state comprises at least one of the following:
a first TCI state corresponding to preset CORESETPoolIndex, wherein the preset CORESETPoolIndex comprises CORESETPoolIndex corresponding to signaling carrying PUSCH configuration information, or the preset CORESETPoolIndex is CORESETPoolIndex with a preset value;
first TCI state arranged at a preset position in all the first TCI states;
a first TCI state corresponding to a TCI state identifier or CORESETPoolIndex indicated by configuration information of the PUSCH in uplink configured grant type 1;
a first TCI state of a preset SRS resource, wherein the preset SRS resource is an SRS resource indicated by a sounding reference signal SRS resource indicator SRI in configuration information of the PUSCH in uplink configured grant type 1; and
at least one first TCI state determined based on a power control parameter in configuration information of the PUSCH in uplink configured grant type 1.

42. The method according to claim 26, wherein in a case that the number of first TCI states is greater than 1, if the type of the target uplink channel is UL RS resource or resource set, the target TCI state comprises:
a first TCI state of the first identifier information associated with the UL RS resource or resource set;
a first TCI state the same as a TCI state of a PDCCH triggering the UL RS resource or resource set; and
a first TCI state corresponding to the UL RS resource or resource set, wherein each UL RS resource or resource set has its respective corresponding TCI state.

43. The method according to claim 26, wherein in a case that the number of first TCI states is equal to 1, if the transmission mode of the target uplink channel is a repetition mode or multi-beam simultaneous transmission mode, the determining, by the network-side device, a target TCI state of a target uplink channel based on target information comprises at least one of the following:
determining, by the network-side device, that a configuration of the repetition mode or multi-beam simultaneous transmission mode of the target uplink channel is ineffective;
determining, by the network-side device, that the target uplink channel is transmitted based on the first TCI state;
determining, by the network-side device, that the target TCI state comprises at least two original TCI states of the target uplink channel; and
determining, by the network-side device, to update a third preset TCI state in at least two original TCI states of the target uplink channel to the first TCI state; wherein the third preset TCI state corresponds to the same first identifier information as the first TCI state, the third preset TCI state is one located at a preset position in the at least two original TCI states of the target uplink channel, or the third preset TCI state is associated with the first TCI state.

44. The method according to claim 26, wherein in a case that the number of first TCI states is equal to 1, the determining, by the network-side device, a target TCI state of a target uplink channel based on target information comprises at least one of the following:
in a case that the target uplink channel corresponds to the same first identifier information as the first TCI state, determining, by the network-side device, that the target TCI state comprises the first TCI state;
in a case that the target uplink channel and the first TCI state correspond to different first identifier information, determining, by the network-side device, that the target TCI state comprises an original TCI state of the target uplink channel or that a PUSCH or a UL RS stops transmission;
determining, by the network-side device, that the target TCI state comprises a TCI state of a PDCCH scheduling or triggering the target uplink channel; or
in a case that the number of first TCI states is equal to 1, if the target uplink channel originally has at least two TCI states, the determining, by the network-side device, a target TCI state of a target uplink channel based on target information comprises:
determining, by the network-side device, that the target TCI state is the first TCI state;
determining, by the network-side device, that the target TCI state comprises at least two original TCI states of the target uplink channel; and
determining, by the network-side device, to update a fourth preset TCI state in at least two original TCI states of the target uplink channel to the first TCI state; wherein the fourth preset TCI state corresponds to the same first identifier information as the first TCI state, the fourth preset TCI state is one arranged at a preset position in the at least two original TCI states of the target uplink channel, or the fourth preset TCI state is associated with the first TCI state.

45. The method according to claim 44, wherein in a case that the type of the target uplink channel is UL RS resource or resource set, the determining, by the network-side device, that the target TCI state is the first TCI state comprises:
determining, by the network-side device, that target TCI states of all RS resources in UL RS resources or resource set associated with the first TCI state comprise the first TCI state; or
determining, by the network-side device, that target TCI states of all RS resources in UL RS resources or resource set corresponding to the same first identifier information as the first TCI state comprise the first TCI state.

46. The method according to claim 26, wherein in a case that the transmission mode of the target uplink channel is a repetition mode, or the type of the target uplink channel is PUSCH or UL RS resource and target DCI scheduling the target uplink channel simultaneously schedules at least two PUSCHs or at least two UL RS resources;
after the network-side device obtains from the terminal the common beam information indicated by the network-side device, the method further comprises:
receiving, by the network-side device, first feedback information from the terminal, wherein the first feedback information is used to indicate that the terminal has correctly received the common beam information;
configuring, by the network-side device based on the first feedback information, the common beam information to take effect; and
determining, by the network-side device, that repetition of the target uplink channel in a slot after a second occasion or a PUSCH or UL RS resource scheduled by the target DCI in a slot after the second occasion uses the common beam information for transmission, wherein the second occasion is an occasion when the common beam information takes effect.

47. An uplink TCI state determining apparatus, applied to a network-side device, wherein the apparatus comprises:
an indicating module adapted to indicate common beam information to a terminal, wherein the common beam information comprises N first transmission configuration indicator TCI states, the first TCI state being a joint TCI state or a separate uplink UL TCI state, and N being an integer greater than or equal to 1; and
a second determining module adapted to determine a target TCI state of a target uplink channel based on target information, wherein the target information comprises at least one of the following:
the number of first TCI states;
arrangement order or arrangement positions of the first TCI states;
correspondence between the first TCI states and first identifier information;
type of the target uplink channel;
transmission mode of the target uplink channel;
time-domain behavior of the target uplink channel or time-domain behavior of information carried on the target uplink channel;
the number of first identifier information corresponding to the target uplink channel; and
value of the first identifier information corresponding to the target uplink channel; wherein
the first identifier information comprises at least one of the following:
control resource set CORESET index information;
CORESET pool index CORESETPoolIndex;
transmission reception point TRP identifier ID information;
channel group identifier information;
CORESET group index information; and
physical uplink control channel PUCCH resource group identifier information.

48. A terminal, comprising a processor and a memory, wherein the memory stores a program or instructions capable of running on the processor, and when the program or instructions are executed by the processor, the steps of the uplink TCI state determining method according to any one of claims 1 to 24 are implemented.

49. A network-side device, comprising a processor and a memory, wherein the memory stores a program or instructions capable of running on the processor, and when the program or instructions are executed by the processor, the steps of the uplink TCI state determining method according to any one of claims 26 to 46 are implemented.

50. A readable storage medium, wherein the readable storage medium stores a program or instructions, and when the program or instructions are executed by a processor, the steps of the uplink TCI state determining method according to any one of claims 1 to 24 are implemented, or the steps of the uplink TCI state determining method according to any one of claims 26 to 46 are implemented.
